# EUROPEAN PATENT APPLICATION

(11) **EP 4 683 382 A1**
(43) Date of publication of application: **21.01.2026**
(21) Application number: 23926742.0
(22) Date of filing: 14.03.2023
(51) Int. Cl.: H04W 36/00

(54) **WIRELESS COMMUNICATION METHOD, ENVIRONMENTAL ENERGY AMP DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: ZHANG, Jinyu, Dongguan, Guangdong 523860 (CN); XU, Weijie, Dongguan, Guangdong 523860 (CN); HU, Rongyi, Dongguan, Guangdong 523860 (CN)
(74) Representative: Mewburn Ellis LLP
(86) International application number: PCT/CN2023/081426
(87) International publication number: WO 2024/187384

(57) **Abstract**

A wireless communication method, an environmental energy AMP device, and a network device. The method comprises: an environmental energy AMP device sending a first signal, wherein the first signal is used by a network device to execute measurement, so as to determine a target network device accessed or switched by the AMP device.

## Description

### TECHNICAL FIELD

Embodiments of the present disclosure relate to the field of communications, and in particular, to a wireless communication method, a terminal device, and a network device.

### BACKGROUND

In a cellular system, a terminal device is carried out mobility management according to a state of the terminal device. For example, a cell selection or reselection process may be performed for a terminal device in a radio resource control (RRC) idle (RRC_IDLE) state or an RRC inactive (RRC_INACTIVE) state. A cell handover process may be performed for a terminal device in an RRC connected (RRC_CONNECTED) state.

Zero power devices are considered for large-scale deployment in cellular systems due to their characteristics such as low cost and maintenance-free operation. However, due to capacity limitations of the zero power device, conventional mobility management modes cannot meet requirements of the zero power device. Therefore, it is necessary to design a mobility management method suitable for the zero power device.

### SUMMARY

The present disclosure provides a wireless communication method, an ambient power (AMP) device and a network device, which may realize a mobility management of a zero power device.

In a first aspect, a wireless communication method is provided, and the method includes transmitting, by an AMP device, a first signal. The first signal is used for a network device to perform a measurement to determine a target network device that the AMP device accesses or hands over to.

In a second aspect, a wireless communication method is provided, and the method includes performing, by a network device, a measurement on a first signal transmitted by an AMP device. A measurement result of the first signal is used for determining a target network device that the AMP device accesses or hands over to.

In a third aspect, a wireless communication method is provided, and the method includes receiving, by a second network device, second configuration information transmitted by a first network device. The second configuration information is used for selecting a target network device to which an AMP device hands over, the first network device is a network device that the AMP device currently accesses, and the second network device is a network device other than the first network device.

In a fourth aspect, an AMP device is provided, which is configured to perform the method in the first aspect or its various implementations.

Specifically, the AMP device includes a functional module configured to perform the method in the first aspect or its various implementations.

In a fifth aspect, a network device is provided, which is configured to perform the method in the second aspect or its various implementations.

Specifically, the network device includes a functional module configured to perform the method in the second aspect or its various implementations.

In a sixth aspect, a network device is provided, and the network device is configured to perform the method in the third aspect or its various implementations.

Specifically, the network device includes a functional module configured to perform the method in the third aspect or its various implementations.

In a seventh aspect, an AMP device is provided, which includes a processor and a memory. The memory is configured to store a computer program, and the processor is configured to call and run the computer program stored in the memory to perform the method in the first aspect or its various implementations.

In an eighth aspect, a network device is provided, which includes a processor and a memory. The memory is configured to store a computer program, and the processor is configured to call and run the computer program stored in the memory to perform the method in any aspect of the second and third aspects or its various implementations.

In a ninth aspect, a chip is provided, which is configured to implement the method in any aspect of the first to third aspects or its various implementations. Specifically, the chip includes a processor. The processor is configured to call and run a computer program from a memory to cause a device equipped with the apparatus to perform the method in any aspect of the first to third aspects or its various implementations.

In a tenth aspect, a computer-readable storage medium is provided, which is configured to store a computer program. The computer program causes a computer to perform the method in any aspect of the first to third aspects or its various implementations.

In an eleventh aspect, a computer program product is provided, which includes computer program instructions. The computer program instructions cause a computer to perform the method in any aspect of the first to third aspects or its various implementations.

In a twelfth aspect, there is provided a computer program that, when executed on a computer, causes the computer to perform the method in any aspect of the first to third aspects or its various implementations.

Based on the above technical solutions, the network device can perform a measurement based on the signal transmitted by the AMP device, thereby realizing a mobility management for the AMP device.

### BRIEF DESCRIPTION OF THE DRAWINGS

FIG. 1 is a schematic diagram showing an architecture of a communication system provided in embodiments of the present disclosure.
FIG. 2 is a schematic diagram of a zero power communication system according to an example of the present disclosure.
FIG. 3 is a principle diagram of power harvesting according to an embodiment of the present disclosure.
FIG. 4 is a principle diagram of back scattering communication according to an embodiment of the present disclosure.
FIG. 5 is a circuit schematic diagram of resistive load modulation according to an embodiment of the present disclosure.
FIG. 6 is a schematic diagram of a wireless communication method according to embodiments of the present disclosure.
FIG. 7 is a schematic diagram of a method for transmitting a first signal provided in embodiments of the present disclosure.
FIG. 8 is a schematic diagram of another method for transmitting a first signal provided in embodiments of the present disclosure.
FIG. 9 is a schematic diagram of yet another method for transmitting a first signal provided in embodiments of the present disclosure.
FIG. 10 is a schematic diagram of yet another method for transmitting a first signal provided in embodiments of the present disclosure.
FIG. 11 is a schematic interaction diagram of a wireless communication method provided in embodiments of the present disclosure.
FIG. 12 is a schematic interaction diagram of a wireless communication method provided in embodiments of the present disclosure.
FIG. 13 is a schematic block diagram of an ambient power (AMP) device provided in embodiments of the present disclosure.
FIG. 14 is a schematic block diagram of a network device provided in embodiments of the present disclosure.
FIG. 15 is a schematic block diagram of another network device provided in embodiments of the present disclosure.
FIG. 16 is a schematic block diagram of a communication device provided in embodiments of the present disclosure.
FIG. 17 is a schematic block diagram of a chip provided in embodiments of the present disclosure.
FIG. 18 is a schematic block diagram of a communication system provided in embodiments of the present disclosure.

### DETAILED DESCRIPTION

Technical solutions in embodiments of the present disclosure will be described below with reference to drawings in the embodiments of the present disclosure. It is apparent that, the described embodiments are only part of the embodiments of the present disclosure, rather than all of the embodiments. With respect to the embodiments in the present disclosure, all other embodiments obtained by those ordinary shilled in the art without making any creative work shall fall within the scope of protection of the present disclosure.

The technical solutions of the embodiments of the present disclosure may be applied to various communication systems, such as: a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial commination networks (NTN) system, a universal mobile telecommunication system (UMTS), wireless local area networks (WLAN), wireless fidelity (WiFi), a 5th-generation (5G) communication system, a cellular Internet of Things system, a cellular passive Internet of Things system or other communication systems.

Generally speaking, conventional communication systems support a limited number of connections and are easy to implement. However, with the development of communication technologies, mobile communication systems support not only conventional communication but also device to device (D2D) communication, machine to machine (M2M) communication, machine type communication (MTC), vehicle to vehicle (V2V) communication, vehicle to everything (V2X) communication, or the like. The embodiments of the present disclosure may also be applied to these communication systems.

Optionally, the communication system in the embodiments of the present disclosure may be applied to a carrier aggregation (CA) scenario, a dual connectivity (DC) scenario, or a standalone (SA) networking scenario.

Optionally, the communication system in the embodiments of the present disclosure may be applied to an unlicensed spectrum, which may also be considered as a shared spectrum. Alternatively, the communication system in the embodiments of the present disclosure may also be applied to a licensed spectrum, which may also be considered as an unshared spectrum.

In the embodiments of the present disclosure, various embodiments are described with respect to a network device and terminal devices. The terminal device may also be referred to as user equipment (UE), an access terminal, a user unit, a user station, a mobile station, a mobile platform, a remote station, a remote terminal, a mobile device, a user terminal, a terminal, a wireless communication device, a user agent or a user device, or the like.

In the embodiments of the present disclosure, the network device may be a device for communicating with a mobile device. The network device may be an access point (AP) in WLAN, a base station (Base Transceiver Station, BTS) in GSM or CDMA, a base station (NodeB, NB) in WCDMA, an evolutional base station (eNB or eNodeB) in LTE, a relay station or access point, an in-vehicle device, a wearable device, a network device (gNB) in an NR network, a network device in cellular Internet of Things, a network device in cellular passive Internet of Things, a network device in a future evolutional PLMN network a network device in an NTN network, or a network device in a zero power communication system (such as a reader/writer of an RFID system).

By way of example and not limitation, in the embodiments of the present disclosure, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may further be a base station installed on land, water or the like.

In the embodiments of the present disclosure, the network device may provide a service for a cell, and the terminal device may communicate with the network device through a transmission resource (e.g., a frequency domain resource, or in other words, a spectrum resource) used by the cell. The cell may be a cell corresponding to a network device (e.g., a base station), or belong to a macro base station or a base station corresponding to a small cell. The small cells here may include a metro cell, a micro cell, a pico cell, a femto cell, etc. These small cells have characteristics of small coverage and low transmission power, and are suitable for providing high-speed data transmission services.

The terminal device may be a station (STA) in a WLAN, which may be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, an in-vehicle device, a wearable device, a terminal device in a next-generation communication system (such as an NR network), a terminal device in a future evolutional public land mobile network (PLMN) network, a terminal device in a cellular Internet of Things, a terminal device in a cellular passive Internet of Things, or a zero power device (such as an electronic tag in an RFID system).

In the embodiments of the present disclosure, the terminal device may be deployed on land, including indoors or outdoors, in forms such as handheld, wearable or in-vehicle; or the terminal device may be deployed on water (such as a steamship, etc.); or the terminal device may be deployed in air (such as an airplane, a balloon and a satellite).

In the embodiments of the present disclosure, the terminal device may be a mobile phone, a pad, a computer with wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, etc.

By way of example and not limitation, in the embodiments of the present disclosure, the terminal device may also be a wearable device. The wearable device, which may also be referred to as a wearable smart device, is a general term for wearable devices developed by performing the intellectualized design on daily wear by applying wearable technology, such as glasses, gloves, watches, clothing and shoes, etc. The wearable device is a portable device that is worn directly on a body or integrated into the user's clothes or accessories. The wearable device not only is a hardware device, but also implements powerful functions through software support, data interaction, and cloud interaction. Generalized wearable smart devices include devices that are fully functional, large in size, and may implement complete or partial functions without relying on smartphones, such as smart watches or smart glasses, as well as devices that only focus on a certain type of application function and need to be used in conjunction with other devices (such as smartphones), such as various smart bracelets and smart jewellery for listening vital signs, or the like.

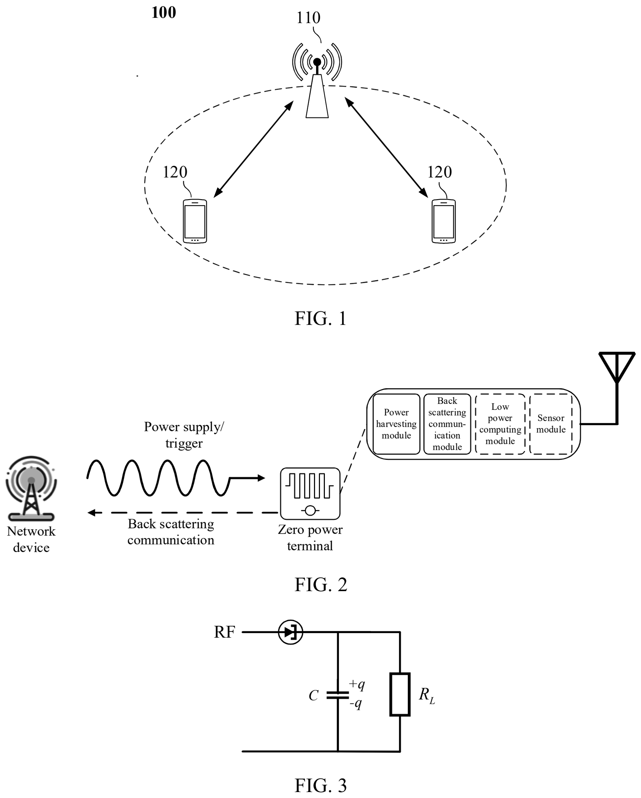

Exemplarily, a communication system 100 applied by the embodiments of the present disclosure is illustrated in FIG. 1. The communication system 100 may include a network device 110, and the network device 110 may be a device for communicating with terminal devices 120 (or referred to as communication terminals or terminals). The network device 110 may provide communication coverage for a specific geographical area and may communicate with terminal devices located within the coverage area.

FIG. 1 exemplarily shows a network device and two terminal devices. Optionally, the communication system 100 may include a plurality of network devices, and each of which may have a coverage area in which another number of terminal devices may be included, which is not limited in the embodiments of the present disclosure.

Optionally, the communication system 100 may further include other network entities such as a network controller and a mobility management entity, which is not limited in the embodiments of the present disclosure.

It should be understood that, in the embodiments of the present disclosure, a device having a communication function in a network/system may be referred to as a communication device. Taking the communication system 100 illustrated in FIG. 1 as an example, the communication device may include a network device 110 and a terminal device 120 with a communication function. The network device 110 and the terminal device 120 may be the specific devices described above, which will not be repeated here. The communication device may further include other devices in the communication system 100, such as a network controller, a mobile management entity and other network entities, which are not limited in the embodiments of the present disclosure.

It should be understood that the terms "system" and "network" are often used interchangeably herein. The term "and/or" herein is only an association to describe associated objects, which indicates that there may be three kinds of relationships. For example, "A and/or B" may indicate three cases where: A exists alone, both A and B exist, and B exists alone. In addition, the character "/" herein generally indicates that the associated objects before and after the character "/" are in an "or" relationship.

It should be understood that the "indicate" mentioned in the embodiments of the present disclosure may mean a direct indication, an indirect indication, or may mean that there is an indication relationship. For example, A indicating B may mean that A directly indicates B, and for example, B may be acquired by A; or, A indicating B may mean that A indirectly indicates B, and for example, A indicates C, and B may be acquired by C; or, A indicating B may mean that there is an association relationship between A and B.

In the description of the embodiments of the present disclosure, the term "correspond" may mean that there is a direct correspondence or indirect correspondence between the two, or may mean that there is an association relationship between the two, or may mean a relationship of indicating and being indicated, a relationship of configuring and being configured, or the like.

In the embodiments of the present disclosure, "pre-defined" may be implemented by pre-saving corresponding codes, tables or other modes that may be used to indicate related information in the device (e.g., including the terminal device and the network device), and the specific implementation thereof is not limited in the present disclosure. For example, "pre-defined" may indicate being defined in a protocol.

In the embodiments of the present disclosure, the term "protocol" may refer to a standard protocol in the communication field, for example, the "protocol" may include an LTE protocol, an NR protocol, and a related protocol used in future communication systems, which is not limited in the present disclosure.

In order to better understand technical solutions of the embodiments of the present disclosure, the technologies related to the present disclosure are described.

### First, Zero power communication

Key technologies of zero power communication include power harvesting, back scattering communication and low power technology.

As illustrated in FIG. 2, a typical zero power communication system (e.g., an RFID system) includes a network device (e.g., a reader/writer of the RFID system) and a zero power device (e.g., an electronic tag). A network device is configured to transmit a wireless power supply signal and a downlink communication signal to a zero power device, and receive a back scattering signal from the zero power device. A basic zero power device includes a power harvesting module, a back scattering communication module, and a low power computing module. In addition, the zero power device may also have a memory or a sensor for storing some basic information (such as object identification) or sensor data (such as ambient temperature and ambient humidity).

For example, the power harvesting module may harvest power carried by radio waves in space (radio waves illustrated in FIG. 2 emitted by a network device) to drive the low power computing module of the zero power device and realize back scattering communication. After obtaining power, the zero power device may receive control commands from the network device and transmit data to the network device based on control signalling in a back scattering mode. The data transmitted may be data stored in the zero power device itself (such as an identity identifier or pre-written information (e.g., a production date, a brand, and a manufacturer of a product)). The zero power device may also be loaded with various sensors, thereby reporting data harvested by the various sensors based on a zero power mechanism.

The key technologies in the zero power communication are described as below.

### 1. RF Power Harvesting

As illustrated in FIG. 3, the RF power harvesting module harvests electromagnetic wave power in space based on the principle of electromagnetic induction, and then obtains power required to drive a zero power device to work, such as driving low power demodulation and a modulation module, a sensor, and memory reading. Therefore, the zero power device does not require conventional batteries.

### 2. Back Scattering

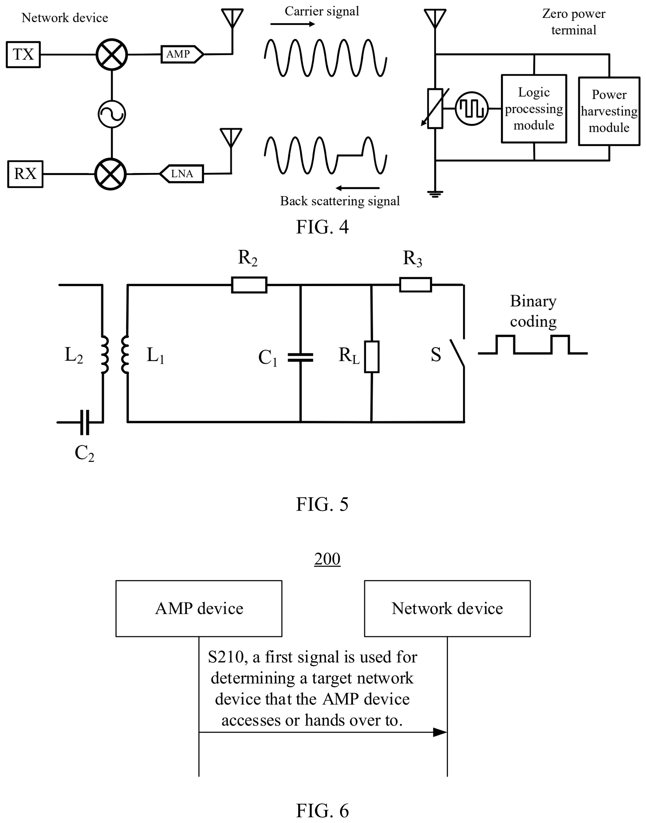

As illustrated in FIG. 4, the zero power device receives a carrier signal transmitted by the network device, modulates the carrier signal, loads information to be transmitted and radiates the modulated signal from the antenna. This information transmission process is referred to as back scattering communication. Back scattering and load modulation functions are inseparable. Load modulation completes the modulation process by adjusting and controlling circuit parameters of an oscillation loop of the zero power device according to a rhythm of a data stream, so that parameters (such as an impedance of the zero power device) change accordingly. Load modulation technology mainly includes two modes: resistive load modulation and capacitive load modulation. In resistive load modulation, a resistor is connected in parallel with the load, which is switched on or off based on the control of the binary data stream, as illustrated in FIG. 5. Switching a resistor on and off causes a change in the circuit voltage, thus implementing amplitude shift keying (ASK), that is, the modulation and transmission of the signal is achieved by adjusting the amplitude of a back scattering signal of the zero power device. Similarly, in capacitive load modulation, the resonant frequency of the circuit may be changed by switching a capacitor on and off, implementing frequency shift keying (FSK), that is, the modulation and transmission of the signal is achieved by adjusting the operating frequency of the back scattering signal of the zero power device.

It can be seen that the zero power device uses the load modulation to modulate the incoming signal, thereby implementing a back scattering communication process. Therefore, the zero power device has significant advantages:
(1) It does not actively transmit a signal, so it does not require complex RF links, such as power amplifier (PA), RF filter, etc.
(2) There is no need to actively generate a high-frequency signal, so no high-frequency crystal oscillator is required.
(3) With the help of back scattering communication, terminal signal transmission does not need to consume power of the terminal.

### 3. Encoding technology

The data transmitted by the zero power device may use different forms of codes to represent binary "1" and "0". Wireless RFID systems usually use one of reverse non-return to zero (NRZ) encoding, Manchester encoding, unipolar return to zero encoding, differential bi-phase (DBP) encoding, differential encoding, pulse interval encoding (PIE), bi-phase space encoding (FM0), Miller encoding, differential encoding, etc. Generally speaking, different encoding technologies use different pulse signals to represent 0 and 1.

In some scenarios, based on power sources and usage modes of a zero power device, the zero power devices may be divided into the following types.

### 1. Passive zero power device

The zero power device (such as an electronic tag in RFID system) does not require internal batteries. When a zero power device approaches a network device (such as a reader/writer in an RFID system), the zero power device is within the near field formed by the antenna radiation of the network device. Therefore, the zero power device antenna generates an induced current through electromagnetic induction, and the induced current drives the low power chip circuit of the zero power device. The demodulation of a forward link signal and the modulation of the reverse link (or reflection link) signal are achieved. For a back scattering link, the zero power device uses back scattering implementation to transmit signals.

It can be seen that the passive zero power device does not require internal batteries to drive either the forward link or the reverse link and is a truly zero power device.

A passive zero power device does not require batteries, and the RF circuit and baseband circuit are very simple. For example, they do not require a low noise amplifier (LNA), a PA, a crystal oscillator, an analog-to-digital converter (ADC) and other devices. Therefore, there are many advantages such as small size, light weight, very low price, and long service life.

A passive zero power terminal may also support other power harvesting modes. By harvesting ambient power (such as light power, thermal power, kinetic power, mechanical power, etc.), power for driving a circuit may be obtained, to support the terminal device to communicate.

### 2. Semi-passive zero power device

A semi-passive zero power device does not install conventional batteries themselves, but may use RF power harvesting modules to harvest radio wave power or use power harvesting modules to harvest ambient power (such as solar power, thermal power, mechanical vibration power, etc.), and store the harvested power in a power storage unit (such as a capacitor). After obtaining power, the power storage unit may drive a low power chip circuit of the zero power device. The demodulation of the forward link signal and the modulation of the reverse link signal are achieved. For the back scattering link, the zero power device uses back scattering implementation to transmit signals. Alternatively, the zero power device may use a low power transmitter to actively transmit communications based on the harvested power.

It can be seen that the semi-passive zero power device does not require internal batteries to drive either the forward link or the reverse link. Although the power stored in the capacitor is used in a work, the power comes from the radio power harvested by the power harvesting module. Therefore, it is also a true zero power device.

A semi-passive zero power device inherits many advantages of passive zero power devices, so it has many advantages such as small size, light weight, very cheap price and long service life.

### 3. Active zero power device

The zero power device used in some scenarios may also be referred to as an active zero power device, which may have internal batteries. Batteries are used to drive a low power chip circuit in the zero power device. The demodulation of the forward link signal and the modulation of the reverse link signal are achieved. But for a back scattering link, the zero power device uses back scattering implementation to transmit signals. Therefore, the zero power consumption of the type of device is mainly reflected in the fact that the signal transmission of the reverse link does not require power of the terminal but uses the back scattering mode.

An active zero power terminal is equipped with internal batteries to supply power for an RFID chip to increase a reading and writing distance of the active zero power terminal and improve reliability of communication. Therefore, it may be applied in some scenarios with relatively high requirements on communication distance, reading latency, etc.

In some scenarios, zero power devices can be divided into the following types based on transmitter type:

### 1) Zero power device based on back scattering

The type of zero power device uses the back scattering mode to transmit uplink data. The zero power device does not have an active transmitter for active transmission, but only has a transmitter for back scattering. Therefore, when the type of zero power consumption device transmits data, the network device is required to provide a carrier, and the type of zero power consumption device performs back scattering based on the carrier to implement data transmission.

### 2) Zero power device based on an active transmitter

The type of zero power device uses an active transmitter with an active transmission capability for uplink data transmission. Therefore, when transmitting data, the type of zero power device may use its own active transmitter to transmit data without the need for network device to provide a carrier. The active transmitter suitable for the zero power device may be, for example, an ultra-low power ASK, or an ultra-low power FSK transmitter, etc. When a 100 µw signal is transmitted, the overall power consumption may be reduced to 400~600 µw.

### 3) Zero power device with both back scattering transmitter and active transmitter

The zero power device may support both back scattering transmitter and active transmitter. The type of zero power device may determine which signal transmission mode to use, that is, whether to use an active transmitter or a backscatter transmitter to transmit signals, based on different situations (such as a power condition, available ambient power) or based on a scheduling of network devices.

With the rapid development of the Internet of Things, existing IoT communication technologies may no longer meet the IoT communication needs in many scenarios, such as the following.

### 1. Harsh communication environment

Certain IoT scenarios may face extreme environments such as high temperature, extremely low temperature, high humidity, high pressure, high radiation or high-speed movement. Such as ultra-high voltage substations, high-speed train track listening, environmental listening in high-cold areas, industrial production lines, etc. In these scenarios, existing IoT terminals will not work due to the limitations of the working environment of conventional power supplies. In addition, extreme working environments are not conducive to IoT maintenance, such as battery replacement.

### 2. Demand for extremely small terminal form factors

Certain IoT communication scenarios, such as food traceability, commodity circulation, and smart wearable, require terminals to have an extremely small size to facilitate use in these scenarios. For example, IoT terminals used for commodity management in the circulation process usually take the form of electronic tags, which are embedded in the commodity packaging in a very small form. For another example, lightweight wearable devices may meet user needs while improving user experience.

### 3. Extremely low-cost IoT communication requirements

Numerous IoT communication scenarios require that the cost of IoT terminals be low enough to enhance their competitiveness relative to other alternative technologies. For example, in logistics or warehousing scenarios, to facilitate the management of a large number of circulating items, an IoT terminal may be attached to each item. In this way, accurate management of the entire logistics process and cycle may be completed through communication between the terminal and the logistics network. These scenarios require that the prices of IoT terminals be sufficiently competitive.

Therefore, to cover these unmet IoT communication needs, cellular networks also need to develop ultra-low-cost, extremely small-size, battery-free/maintenance-free IoT, and zero power IoT may just meet this need.

Zero power Internet of Things (IoT) may also be referred to as ambient power enabled IoT (Ambient IoT or AMP IoT for short). A zero power device may also be referred to as an Ambient IoT device or an AMP IoT device. An ambient IoT device may refer to an IoT device that uses various ambient power, such as wireless radio frequency power, light power, solar power, thermal power, mechanical power, and other ambient power. The type of device may have no power storage capability or may have very limited power storage capability, such as using a capacitor with a capacity of tens of µF.

Ambient IoT may be used in at least four scenarios:
1. Object recognition, such as logistics, production line product management, and supply chain management;
2. Environmental monitoring, such as temperature, humidity and harmful gas monitoring of working environment and natural environment;
3. Positioning, such as indoor positioning, intelligent object search, production line item positioning;
4. Intelligent control, such as intelligent control of various electrical appliances in smart home (turning on and off air conditioners, adjusting temperature), and intelligent control of various facilities in agricultural greenhouses (automatic irrigation and fertilization).

### Second, Cellular Passive Internet of Things

With the increase in 5G industry applications, there are more and more types of connected objects and application scenarios, and there will be higher requirements on the cost and power consumption of communication terminals. The application of battery-free, low-cost passive IoT devices will become a key technology for cellular IoT, enriching the types and number of 5G network-linked terminals and truly realizing the Internet of Everything. Passive IoT devices may be based on zero power communication technologies, such as RFID technology, and may be extended on this basis to be suitable for cellular IoT.

To facilitate understanding of the embodiments of the present disclosure, a power supply signal, a scheduling signal and a carrier signal related to zero power communication are described.

### 1. Power supply signal

The power supply signal is a power source for a zero power device to harvest power.

A power supply signal carrier may be a base station, a smart phone, a smart gateway, a charging station, a micro base station, or the like.

A frequency band of a radio wave used for power supply may be a low frequency, a medium frequency, a high frequency, or the like.

In terms of waveform, a radio wave used for power supply may be a sine wave, a square wave, a triangle wave, a pulse, a rectangular wave, etc.

In addition, the power supply signal may be a continuous wave or a discontinuous wave (i.e., a certain period of interruption is allowed).

Optionally, the power supply signal may be an existing signal in the 3GPP standard. For example, it may be a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), etc. Alternatively, it also may be a WIFI signal or a bluetooth signal.

Optionally, the power supply signal may also be implemented by adding a new signal, for example, adding a signal dedicated to power supply.

### 2. Triggering signal or scheduling signal

The triggering signal is used for triggering or scheduling a zero power device to transmit data.

A trigger signal carrier may be a base station, a smart phone, a smart gateway, etc.

A frequency band of a radio wave used for triggering or scheduling may be a low frequency, a medium frequency, a high frequency, or the like.

In terms of waveform, a radio wave used for triggering or scheduling may be a sine wave, a square wave, a triangle wave, a pulse, a rectangular wave, or the like.

In addition, the triggering signal may be a continuous wave or a discontinuous wave (i.e., a certain period of interruption is allowed).

Optionally, the triggering signal may be an existing signal in the 3GPP standard. For example, it may be an SRS, a PUSCH, a PRACH, a PUCCH, a PDCCH, a PDSCH, a PBCH, or a WIFI signal or a bluetooth signal.

Optionally, the triggering signal may also be implemented by adding a new signal, for example, adding a signal dedicated for triggering or scheduling.

### 3. Carrier signal

The carrier signal is used for the zero power device to generate a back scattering signal. For example, the zero power device may modulate a received carrier signal according to information to be transmitted to form a back scattering signal.

A carrier signal carrier may be a base station, a smart phone, a smart gateway, etc.

A frequency band of a radio wave used as the carrier signal may be a low frequency band, a medium frequency band, a high frequency band, or the like.

In terms of waveform, the radio wave used as the carrier signal may be a sine wave, a square wave, a triangle wave, a pulse, a rectangular wave, or the like.

In addition, the carrier signal may be a continuous wave or a discontinuous wave (i.e., a certain period of interruption is allowed).

Optionally, the carrier signal may be an existing signal in the 3GPP standard. For example, it may be an SRS, a PUSCH, a PRACH, a PUCCH, a PDCCH, a PDSCH, a PBCH, or a WIFI signal or a bluetooth signal.

Optionally, the carrier signal may also be implemented by adding a new signal, for example, adding a carrier signal that is dedicated to generate a backscatter signal.

It should be noted that in the embodiments of the present disclosure, the power supply signal, the scheduling signal and the carrier signal may be a same signal, or may also be different signals. For example, the power supply signal may be used as a carrier signal, and the scheduling signal may also be used as a carrier signal.

In a cellular system, mobility management may be performed according to the state of the terminal device. For example, a cell selection or reselection process may be performed for a terminal device in a radio resource control (RRC) idle (RRC_IDLE) state or an RRC inactive (RRC_INACTIVE) state, and a cell handover process may be performed for a terminal device in an RRC connected (RRC_CONNECTED) state.

The zero power devices may achieve high-density and large-scale deployment at a lower cost. At the same time, they have huge application potential in industrial sensor networks, smart home, smart agriculture, logistics and warehousing, smart wearable, health care, and the like due to their maintenance-free and battery-free characteristics. The zero power device may be combined with sensor devices to perform environmental monitoring, hazard warnings, alarms, etc.

Due to the characteristics of the zero power devices such as being maintenance-free, battery-free, and low-cost, conventional mobility management methods cannot meet the needs of zero power devices considering high-density and large-scale deployment. Therefore, it is necessary to design a mobility management method for the zero power device.

To facilitate understanding of the technical solutions of the embodiments of the present disclosure, the technical solutions of the present disclosure are described in detail below through specific embodiments. The following related technologies as optional solutions may be arbitrarily combined with the technical solutions of the embodiments of the present disclosure, which all belong to the protection scope of the embodiments of the present disclosure. The embodiments of the present disclosure include at least part of the following contents.

FIG. 6 is a schematic interaction diagram of a wireless communication method 200 according to the embodiments of the present disclosure. As illustrated in FIG. 6, the method 200 includes the following contents.

In S210, an ambient power (AMP) device transmits a first signal.

Correspondingly, a network device receives the first signal and performs a measurement on the first signal.

The network device performs the measurement on the first signal to determine a target network device that the AMP device accesses or hands over to.

In some embodiments, the network device may be a base station in a cellular communication system, such as a gNB in an NR system, or may also be an AP in a WIFI system, etc., which is not limited in the present disclosure.

In the embodiments of the present disclosure, the AMP device may be also referred to as an ambient power Internet of Things device (AMP IoT device or Ambient IoT device), a zero power device, or a zero power terminal.

In some embodiments, the AMP device may be a type of device defined based on characteristics such as complexity, a power source and a communication method of the device, and a waveform used by the device.

For example, the AMP device may be a device that communicates based on ambient power. For example, the AMP device uses ambient power such as wireless radio frequency power, light power, solar power, thermal power, and mechanical power to obtain power for communication.

For another example, the AMP device may be a type of device with low complexity or using a new waveform. For example, the AMP device uses a low-order modulation mode or a simple waveform or a signal with a smaller bandwidth for communication.

For yet another example, the AMP device may be a type of device that supports back scattering communication.

In some embodiments, the AMP device may also support active transmission communication mode.

In some embodiments, the first signal may be transmitted in a back scattering mode or an active transmission mode.

In some embodiments, the first signal may be also referred to as a reference signal, an uplink reference signal.

It should be understood that the mobility management method provided in the embodiments of the present disclosure may be applicable to the mobility management of the AMP device, or may also be applicable to the mobility management of the conventional terminal, which is not limited in the present disclosure.

Optionally, the mobility management method provided in the embodiments of the present disclosure may be applicable to a scenario in which uplink and downlink are symmetrical, that is, link qualities of the uplink and the downlink are relatively consistent.

In some embodiments, a plurality of network devices may perform measurements on the first signal transmitted by the AMP device, and a target network device may be determined based on measurement results of the first signal by the plurality of network devices.

For example, the target network device is a network device corresponding to the highest measurement result among the measurement results by the plurality of network devices (or a network device with the best signal quality). Alternatively, the target network device is a network device whose measurement result meets a measurement result threshold value (signal quality meets a signal quality threshold value), for example, a network device whose measurement result is greater than or equal to the measurement result threshold value.

In some embodiments, the measurement result of the first signal may include but is not limited to at least one of:
reference signal receiving power (RSRP), reference signal receiving quality (RSRQ), signal to interference plus noise ratio (SINR), or received signal strength indication (RSSI).

In some embodiments, the first signal is transmitted in a broadcast mode or a unicast mode.

For example, the AMP device transmits a first signal, and the plurality of network devices perform measurements on the first signal.

For another example, the AMP device transmits a first signal to each of the plurality of network devices, and each of the plurality of network devices only performs a measurement on the first signal transmitted by the AMP device to itself.

It should be understood that the present disclosure does not limit the power source of the AMP device, which may, for example, come from radio frequency power, light power, solar power, thermal power, mechanical power.

In some specific embodiments, the AMP device obtains power through a power supply signal. The power supply signal may be provided by a network device, or may be provided by a dedicated power supply device or a signal source. For example, the power supply device or the signal source may transmit a power supply signal periodically or continuously.

In some embodiments, the first signal is transmitted in an active transmission mode.

For example, an AMP device that supports active transmission may transmit the first signal in the active transmission mode.

In some other embodiments, the first signal is transmitted in a back scattering mode.

For example, the AMP device may perform back scattering on a carrier signal to transmit the first signal. For example, the AMP device may perform amplitude modulation, phase adjustment or frequency modulation on the carrier to obtain the first signal.

It should be understood that the present disclosure does not limit a source of the carrier signal for the back scattering. For example, the carrier signal may be provided by a network device, or may be provided by a dedicated carrier transmitting device or a signal source. For example, the carrier transmitting device or the signal source may transmit the carrier signal periodically or continuously.

In some embodiments, the dedicated power supply device and the dedicated carrier transmitting device may be a same device or different devices, which is not limited in the present disclosure.

In some embodiments, in a case where the first signal is transmitted in a unicast mode, carrier signals corresponding to first signals transmitted to different network devices may be a same carrier signal, or may be different carrier signals.

In some embodiments, in the case where the first signal is transmitted in the unicast mode, frequencies of the first signals transmitted to different network devices may be the same, or may be different.

In some embodiments, in the case where the first signal is transmitted in the unicast mode, transmission powers of the first signals transmitted to different network devices may be the same, or may be different.

In some embodiments, in a case where the transmission powers of the first signals transmitted by the AMP device to different network devices are the same, the target network device may be determined directly by comparing measurement results of the first signal by the network devices. In a case where the transmission powers of the first signals transmitted by the AMP device to different network devices are different, the AMP device needs to notify the network device side of information related to the transmission power of the first signal. In this way, the network devices may compensate and calibrate the measurement results, and then the target network device is determined based on the calibrated measurement results to ensure the accuracy of the selected target network device.

In some embodiments, in the case where the first signal is transmitted in the unicast mode, powers of the carrier signals corresponding to the first signals transmitted to different network devices (for example, powers provided by different network devices) may be the same, or may be different.

Assuming that the power loss of the AMP device during the back scattering process is relatively constant, a power value of the first signal measured by the network device is equal to the transmission power of the carrier signal minus twice the path loss power, and then minus back scattering loss. The path loss power represents one-way path loss between the network device and the AMP device, and the back scattering loss may refer to the power loss of the AMP device performing the back scattering. In a case where the powers of the carrier signals transmitted by different network devices are the same, the power values of the first signals measured by the network devices may be directly compared to determine qualities of links between the network devices and the AMP device. In a case where the powers of the carrier signals transmitted by different network devices are different, it is necessary to perform compensation calibration on the power values of the first signals measured by the network devices according to different transmission powers and then perform comparison.

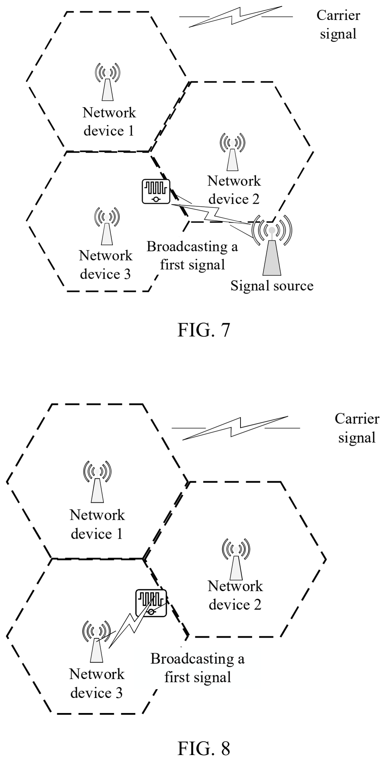

FIG. 7 is a schematic diagram of a method for transmitting a first signal provided in the embodiments of the present disclosure. In the example of FIG. 7, a first signal is transmitted in a broadcast mode, and a carrier signal of the first signal may be provided by an independent signal source. The AMP device may perform back scattering on the carrier signal transmitted by the independent signal source to broadcast the first signal to different network devices.

FIG. 8 is a schematic diagram of another method for transmitting a first signal provided in the embodiments of the present disclosure. The first signal in FIG. 8 is also transmitted in a broadcast mode, and a difference from FIG. 7 is that the carrier signal of the first signal is provided by the network device.

It should be understood that FIGS. 7 and 8 are only used to illustrate the examples of broadcasting the first signal in the back scattering mode. Alternatively, the AMP device may also broadcast the first signal in an active transmission mode, which is not limited in the present disclosure.

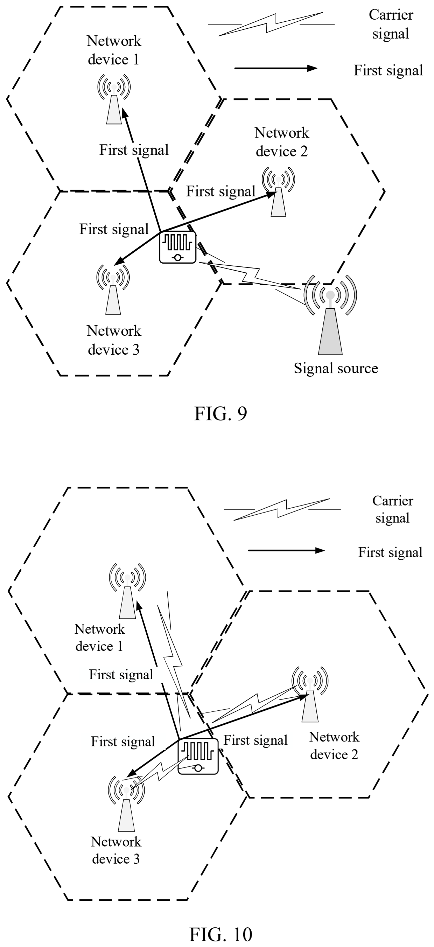

FIG. 9 is a schematic diagram of yet another method for transmitting a first signal provided in the embodiments of the present disclosure. In the example of FIG. 9, the first signal is transmitted in a unicast mode, and a carrier signal of the first signal may be provided by an independent signal source. The AMP device may perform back scattering on the carrier signal transmitted by the independent signal source to transmit the first signal in the unicast mode to different network devices.

FIG. 10 is a schematic diagram of yet another method for transmitting a first signal provided in the embodiments of the present disclosure. The first signal in FIG. 10 is also transmitted in a unicast mode, and a difference from FIG. 9 is that a carrier signal of the first signal is provided by the network device. For example, the AMP device uses a signal transmitted by network device 1 for back scattering to unicast the first signal to network device 1, uses a signal transmitted by network device 2 for back scattering to unicast the first signal to network device 2, and uses a signal transmitted by network device 3 for back scattering to unicast the first signal to network device 3.

It should be understood that in the example of FIG. 10, the AMP device may also use a same carrier signal for back scattering to unicast the first signal to different network devices. For example, the AMP device may use the signal transmitted by the network device 1 (or network device 2 or network device 3) for back scattering to unicast the first signal to the network device 1, the network device 2 and the network device 3.

It should be understood that FIGS. 9 and 10 are only used to illustrate the examples of the unicast transmission of the first signal in the back scattering mode. Alternatively, the AMP device may also unicast the first signal in an active transmission mode, which is not limited in the present disclosure.

In some embodiments, the target network device is a network device for initial access (or initial match, initial association, initial connection) of the AMP device.

In some embodiments, the target network device is a network device for handover of the AMP device.

For example, under certain conditions, the AMP device may hand over from one network device to another network device. In other words, the AMP device may reassociate from one network device to another network device.

In some embodiments, the target network device is selected by a decision node from a plurality of network devices. The decision node may be one of the plurality network devices that perform measurements on the first signal, or may be a high-level network node of the plurality of network devices, or may be a newly added functional entity. For example, after performing the measurements on the first signal, the plurality of network devices may report the measurement results to the decision node, and then the decision node may select the target network device from the plurality of network devices.

In the following, with reference to Embodiment 1 and Embodiment 2, mobility management methods of the AMP device in the initial access and handover scenarios are described.

### Embodiment 1: Initial access scenario

In the embodiment 1, the first signal is used for determining a target network device that the AMP device initially accesses.

For example, in a case where the AMP device is just started, or in a case where system information of the network device has not been obtained, the technical solution in Embodiment 1 may be used for initial access.

Optionally, in the Embodiment 1, the first signal is also referred to as an initial access signal, an initial access trigger signal, an initial access measurement signal, an uplink access signal, etc., which is not limited in the present disclosure.

Optionally, in the Embodiment 1, the AMP device supports a back scattering communication mode and/or an active transmission communication mode.

In some embodiments, resources used for the AMP device to transmit the first signal may be determined based on identity information of the AMP device, which is helpful in avoiding a plurality of AMP devices from using same resources to transmit the initial access signal.

In some embodiments, a frequency of the first signal is predefined. For example, candidate frequency(ies) of the first signal may include one or more fixed frequencies.

In some embodiments, the frequency of the first signal is related to a frequency of a power supply signal of the AMP device.

For example, the frequency of the first signal has a first frequency offset from the frequency of the power supply signal of the AMP device.

Exemplarily, in a case where the AMP device receives a power supply signal at a frequency f₁, it transmits a first signal at a frequency f₂=f₁+offset₁.

In some embodiments, a physical layer portion of the first signal may include a preamble sequence and a cyclic prefix (CP).

Optionally, the preamble sequence may be used for the network device to identify the AMP device, and/or for the network device to perform a measurement, and/or for estimating a propagation delay between the network device and the AMP device.

Optionally, the preamble sequence may be determined according to the identity information of the AMP device.

In some embodiments, the first signal includes at least one of the following information:
part or all of identity information of the AMP device;
parameters related to a signal strength for determining the first signal;
first request information for requesting to transmit uplink data to the network device;
configuration information related to the measurement, used for the network device to perform the measurement on the first signal;
configuration information related to processing of measurement results, used for a plurality of network devices to report and/or process the measurement results of the first signal;
a configuration related to a response signal of the first signal;
selection condition information of the target network device; or
second request information for requesting to establish an association between the AMP device and the network device, or for establishing a connection between the AMP device and the network device (which may also be referred to as an association request or a connection request).

In some embodiments, the identity information of the AMP device may be used for the network device to identify the AMP device, and/or, for the network device to record information of the AMP device and/or schedule data transmission of the AMP device.

In some embodiments, the identity information of the AMP device may be identification information of the AMP device, such as UEID.

In some embodiments, the parameters related to the signal strength for determining the first signal includes:
a transmission power of the first signal and/or parameters related to back scattering loss of the AMP device.

For example, in a case where the first signal is transmitted in the unicast mode and the transmission powers of the first signals transmitted to different network devices are different, the first signal may carry the parameters related to the signal strength for determining the first signal. As a result, the network devices may calibrate and compensate the measurement results of the first signal, thereby ensuring the accuracy of the selected target network device.

In some embodiments, the first request information may be used for indicating that the AMP device has an uplink transmission demand. Optionally, the first request information may be indicated by 1-bit information. For example, different values of the 1-bit information are used for indicating whether the AMP device has an uplink transmission requirement. Exemplarily, a value of 1 indicates that there is an uplink transmission demand, otherwise it indicates that there is no uplink transmission demand.

In some embodiments, the configuration information related to the measurement may indicate a configuration related to the measurement of the first signal. That is, the network device may perform the measurement on the first signal according to the configuration information related to the measurement.

As an example, the configuration information related to the measurement may include but is not limited to at least one of the following:
parameters for determining a measurement time at which the network device performs the measurement on the first signal, such as a transmission period of the first signal, or
filter information used by the network device to perform the measurement on the first signal.

In some embodiments, the measurement period or measurement time during which the network device performs the measurement on the first signal may be an integer multiple of the transmission period of the first signal. For example, the measurement time is equal to K times the transmission period of the first signal, where K is a positive integer.

In some embodiments, in a case where the first signal does not include the configuration information related to the measurement, the network device may perform the measurement using a default configuration. For example, the network device may perform the measurement based on a default transmission period and/or default filter information of the first signal.

In some embodiments, the configuration information related to the processing of the measurement results is used for configuring a reporting mode and/or processing mode of the measurement results of the first signal by the plurality of network devices. For example, the AMP device may instruct to report the measurement results of the first signal to a first network node, or report the measurement results of the first signal to one of the plurality of network devices. The first network node is a high-level network node of the plurality of network devices.

In some embodiments, in a case where the first signal does not include the configuration information related to the processing of the measurement results, the network device may use a default configuration to report or process the measurement results, for example, reporting the measurement results of the first signal to one of plurality of network devices or the first network node.

In some embodiments, the AMP device may perform a monitoring configuration for the response signal according to the configuration related to the response signal of the first signal. Alternatively, the network device may transmit the response signal according to the configuration related to the response signal of the first signal.

In some embodiments, the configuration related to the response signal of the first signal is used for configuring a time window corresponding to the response signal. For example, it is used for configuring at least one of a starting position, a time length or a period of the time window.

In a specific implementation, the AMP device may monitor the response signal within the time window.

Correspondingly, after receiving the configuration related to the response signal, the network device may reply with the response signal within the time window in a case where it needs to reply with the response signal to the AMP device.

In some embodiments, in a case where the first signal does not include the configuration related to the response signal of the first signal, the configuration related to the response signal may is a default configuration. For example, by default, the AMP device starts to monitor the response signal at the first time offset position from the first signal, and the monitoring time length may be defaulted to a first time length. Correspondingly, after receiving the first signal, the network device may reply with the response signal within the time window in a case where it needs to reply with the response signal. The time window starts at the first time offset position from the first signal and has the first time length.

In some embodiments, the selection condition information of the target network device includes at least one of the following information:
a threshold value that a measurement result of the first signal by the target network device needs to meet, frequency information that the target network device needs to support, bandwidth information that the target network device needs to support, or data rate information that the target network device needs to support.

In some embodiments, the target network device may be a network device that meets at least one of the following conditions:
a measurement result of the first signal by the target network device being greater than or equal to the threshold value;
a measurement result of the first signal by the target network device being highest;
a frequency supported by the network device including a frequency supported by the AMP device;
a bandwidth supported by the network device including a bandwidth supported by the AMP device; or
a data rate supported by the network device including a data rate supported by the AMP device.

In the embodiments of the present disclosure, the AMP device has limited capabilities. Therefore, in a case where the frequency supported by the network device include the frequency supported by the AMP device, and/or the bandwidth supported by the network device includes the bandwidth supported by the AMP device, and/or the data rate supported by the network device includes the data rate supported by the AMP device, it can be considered that the network device supports normal data transmission after the access of the AMP device.

Therefore, in the embodiments of the present disclosure, when the target network device for initial access is selected, the link quality between the network device and the AMP device is considered. In addition, whether the network device supports the transmission demands of the AMP device is also considered, for example, whether the frequency, bandwidth, and data rate supported by the network device meet the demands of the AMP device for frequency, bandwidth and data rate. It is conducive to ensuring normal data transmission after the AMP device accesses the network device.

In some embodiments of the present disclosure, the method 200 further includes:
obtaining, by the AMP device, information related to the target network device, such as identification information of the target network device and/or system configuration information of the target network device. Optionally, the information related to the target network device may be obtained from the target network device, or may also be obtained from other network devices (e.g., a decision node of the target network device).

In some embodiments of the present disclosure, the method 200 further includes:
monitoring, by the AMP device, a response signal of the first signal within a first time window.

In some embodiments, the first time window may be determined based on the configuration related to the response signal of the first signal, or may be determined based on a default configuration. For example, a starting position of the first time window has a first time offset from the position of the first signal, and the length of the first time window is a predefined time length or a default time length.

In some embodiments, the response signal may be transmitted by the target network device.

In some embodiments, the response signal further includes at least one of the following information:
identity information of the target network device;
configuration information for the AMP device to transmit uplink data;
system configuration information of the target network device; or
an association identifier between the AMP device and the target network device, such as an association ID.

In some embodiments, the target network device may estimate a propagation delay between the target network device and the AMP device based on the first signal. The propagation delay or a timing advance (TA) determined based on the propagation delay may be used for the AMP device to determine transmission time of the uplink data when transmitting the uplink data.

In some embodiments, the estimated propagation delay or the TA determined according to the propagation delay may be carried in the response signal.

That is, the AMP device may use the propagation delay obtained through the response signal or the TA determined based on the propagation delay to determine the transmission time of the uplink data when transmitting the uplink data.

In some embodiments, the system configuration information of the target network device may include system information broadcast by the target network device, or information carried in a beacon frame broadcast by the target network device.

In some embodiments, the configuration information for the AMP device to transmit uplink data may be used for configuring time-frequency resources for the AMP device to transmit the uplink data. When performing initial access, the AMP device transmits a data transmission request to the network device. Furthermore, the target network device allocates resources for data transmission to the AMP device, so that the AMP device may perform data transmission as soon as possible.

It should be understood that, in the embodiments of the present disclosure, the system configuration information of the target network device, the configuration information for the AMP device to transmit the uplink data may be obtained in the response signal, or may be obtained after the response signal (for example, through receiving a downlink message from the target network device after the response signal).

In some embodiments of the present disclosure, the method 200 further includes:
determining, according to whether the response signal is associated with the identity information of the AMP device (or whether the response signal is associated with the first signal), whether a network device corresponding to the response signal is the target network device.

In some embodiments, the association of the response signal with the identity information of the AMP device may include but is not limited to:
the response signal including part or all of the identity information of the AMP device;
the time-frequency resources of the response signal being associated with the identity information of the AMP device;
a radio network temporary identity (RNTI) in the response signal being associated with the identity information of the AMP device;
the response signal including information calculated based on the AMP identity information carried in the first signal (for example, if the identity information carried in the first signal is X, the response signal including information calculated based on a function F(X)); or
the first signal carrying an association request ID=Y, and the response signal including Y or information calculated based on the function F(Y).

In some embodiments, the input X and output F(X) of the function F(X) are in a one-to-one mapping correspondence. That is, the input X and the output F(X) are uniquely determined.

In some embodiments, in a case where the response signal is associated with the identity information of the AMP device (it can be considered that the monitoring is successful), the network device corresponding to the identity information in the response signal is determined as the target network device.

Further optionally, the method 200 further includes:
transmitting, by the AMP device, an acknowledgment signal of the response signal to the target network device.

At this point, it can be considered that the AMP device and the target network device are associated, or connected.

Furthermore, the AMP device transmits uplink data to the target network device according to the configuration information for the AMP device to transmit the uplink data in the response signal, and/or the AMP device receives broadcast information transmitted by the target network device.

In some other embodiments of the present disclosure, the method 200 further includes:
transmitting, by the AMP device, a second signal in a case where no response signal is received within the first time window or a received response signal is not associated with the identity information of the AMP device (in this case, it can be considered that the monitoring is failed). A transmission power of the second signal is greater than the transmission power of the first signal, and/or resources of the second signal are different from resources of the first signal.

That is, in a case where the monitoring is failed, the AMP device may increase the transmission power of the initial access signal or change the resources of the initial access signal, and transmit an initial access signal again.

It should be understood that, in the embodiments of the present disclosure, the second signal and the first signal have a same function and are both initial access signals. The second signal is an initial access signal transmitted again in a case where the response signal monitoring of the previous initial access signal (i.e., the first signal) is failed. Measurement and processing behaviours for the first signal and the second signal by the network device are consistent. The AMP device side transmits the two initial access signals in a similar mode. The difference is that in order to ensure successful initial access, the signal transmission power is increased and/or different resources are used. The transmitting mode of the second signal, and the implementation related to the measurement and processing of the second signal by the network device refer to the relevant description of the first signal, which will not be repeated here for the sake of brevity.

In some embodiments, the first signal and the second signal have a same frequency.

In some embodiments, after the AMP device fails to monitor continuously for N times, it can be considered that there is no target network device that meets the condition at the frequency, and the AMP device may handover to other candidate frequencies to transmit the initial access signal.

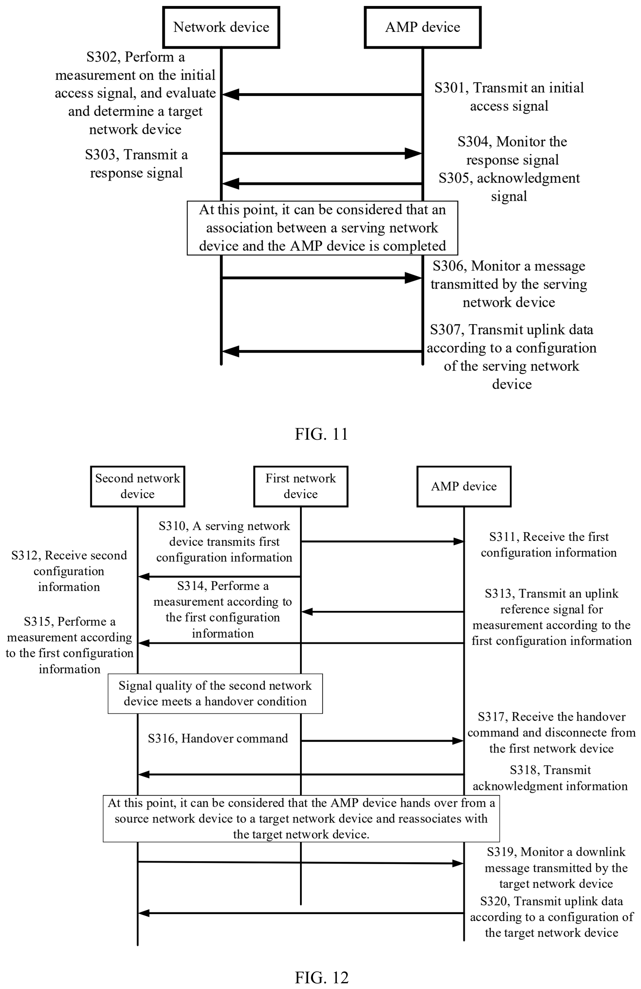

FIG. 11 is a schematic interaction diagram of a mobility management method in an initial access scenario. As illustrated in FIG. 11, the following steps may be included.

In S301, an AMP device transmits an initial access signal.

In S302, a network device perform a measurement on the initial access signal, and evaluates and determines a target network device (i.e., a serving network device).

For example, a plurality of network devices may report measurement results of the initial access signal to a decision node, and the decision node selects a target network device from the plurality of network devices. The decision node may be one of the plurality of network devices, or may also be a high-level network node of the plurality of network devices.

Furthermore, the decision node notifies the target network device that it is a target network device of the AMP device.

For example, the decision node may transmit first information to the target network device, and the first information includes identity information of the AMP device. Optionally, the first information further includes identification information of the target network device.

In S303, the target network device replies with a response signal to the AMP device. The response signal includes identification information of the target network device. For example, in a case where the target network device is notified that it is the target network device of the AMP device, the target network device replies with a response signal to the AMP device.

In S304, the AMP device monitors the response signal. If the response signal is received and the response signal is associated with the identity information of the AMP device, it is determined that the monitoring is successful and S305 is performed. Otherwise, S301 is performed.

In S305, the AMP device replies with an acknowledgment signal to the target network device.

In S306, the AMP device monitors a message transmitted by the target network device, such as a beacon frame, a discovery message, configuration information.

In S307, the AMP device transmits uplink data according to configuration information transmitted by the target network device.

In summary, through the process described in Embodiment 1, the target network device may be selected for the AMP device, and an association between the target network device and the AMP device may be established, or a connection between the target network device and the AMP device may be established. In this way, thereafter, the AMP device only needs to monitor a downlink message transmitted by the target network device, and then perform uplink transmission according to configuration information indicated by the target network device.

Embodiment 2: Network device handover scenario

In the Embodiment 2, a network device that an AMP device currently accesses may be a first network device.

In the embodiment of the present disclosure, the network device that the AMP device currently accesses is also referred to as a source network device, or a serving network device.

In the Embodiment 2, the first signal is also referred to as an uplink reference signal or an uplink measurement signal.

In the Embodiment 2, the target network device may be selected by the first network device from a plurality of network devices, or may also be selected by a decision node.

Optionally, in the Embodiment 2, the AMP device may hand over from the first network device to the second network device in a case where at least one of the following conditions is met:
a link quality between the first network device and the AMP device being lower than a first threshold;
a link quality between the second network device and the AMP device being higher than a second threshold; or
the link quality between the first network device and the AMP device being lower than the link quality between the second network device and the AMP device by a third threshold.

In some embodiments, handover of the AMP device from the first network device to the second network device may refer to:
disconnecting an association between the AMP device and the first network device, and establishing an association between the AMP device and the second network device; or
disconnecting a connection between the AMP device and the first network device, and establishing a connection between the AMP device and the second network device.

In some embodiments, the first signal is transmitted according to first configuration information of the first network device. That is, the source network device may indicate configuration information for transmitting an uplink reference signal to the AMP device.

In some embodiments, the first configuration information includes at least one of the following:
sequence information, resource information, period information, or transmission power information corresponding to the first signal.

In some embodiments, the first configuration information may be specific to an AMP device (i.e., AMP device specific). For example, the AMP device may transmit a common uplink reference signal according to the first configuration information, and all network devices perform measurements on a same uplink reference signal.

In other embodiments, the first configuration information may be for the link between the AMP device and the network device (i.e., AMP device-NW specific), and it can be considered that the configuration of the uplink reference signal and the link between the AMP device and the network device have a mapping relationship. For example, an uplink reference signal sequence transmitted by the AMP device to each network device is different. In a specific implementation, the AMP device transmits different uplink reference signals to different network devices according to different configuration information. In this case, the network device only measures the uplink reference signal transmitted to itself.

In some embodiments, the first configuration information may be associated with the AMP device, and the network device identifies the AMP device according to different configuration information. For example, different AMP devices may correspond to different sequences, and the network device may identify different AMP devices according to the sequences. For another example, different AMP devices may use different resources to transmit the uplink reference signal, and the network device may identify different AMP devices according to the resources of the uplink reference signal.

In some embodiments, the first configuration information is determined according to a capability of the AMP device.

In some embodiments, the capability of the AMP device may include, but is not limited to, a power harvesting mode supported by the AMP device, a power harvesting efficiency supported by the AMP device, a maximum transmission power supported by the AMP device, a signal transmission mode supported by the AMP device, etc.

In some embodiments of the present disclosure, the method 200 further includes:
transmitting, by the first network device, second configuration information to at least one second network device. The second configuration information includes the first configuration information. The at least one second network device may be other network devices other than the first network device, or a neighbouring network device.

That is, the source network device may notify a transmission configuration of the uplink reference signal to other network devices, so that the other network devices may receive and measure the uplink reference signal transmitted by the AMP device according to the transmission configuration.

In some embodiments, the second configuration information is transmitted in a broadcast mode or a unicast mode.

In some embodiments, the second configuration information further includes at least one of the following:
information related to measurement time at which the second network device performs the measurement, filter information used for the second network device to perform the measurement, an association between the first configuration information and the AMP device, a configuration related to the processing of measurement result(s) of the first signal by the at least one second network device, or handover condition information of the target network device.

In some embodiments, the information related to the measurement time at which the second network device performs the measurement may be determined based on a transmission period of the uplink reference signal. For example, the measurement period for which the second network device performs the measurement may be an integer multiple of the transmission period of the uplink reference signal.

In some embodiments, the configuration related to the processing of the measurement result(s) of the first signal by the at least one second network device is used for configuring the reporting mode and/or processing mode of the measurement result(s) of the first signal by the at least one second network device. For example, the AMP device may instruct to report the measurement result(s) of the first signal to the second network node, or report the measurement result(s) of the first signal to one of the at least one second network devices. The second network node is a high-level network node of the at least one second network device.

In some embodiments, in a case where the second configuration information does not include the configuration related to the processing of the measurement result(s) of the first signal by the at least one second network device, the at least one second network device may report or process the measurement result(s) using a default configuration.

In some embodiments, the handover condition information of the target network device includes at least one of the following information:
a threshold value that a measurement result of the first signal by the first network device needs to meet, a threshold value that a measurement result of the first signal by the target network device needs to meet, frequency information that the target network device needs to support, bandwidth information that the target network device needs to support, or data rate information that the target network device needs to support.

In some embodiments, the handover condition information of the target network device may include at least one of the first threshold, the second threshold or the third threshold.

In some embodiments, the target network device may be a neighbouring network device that meets at least one of:
a link quality between the source network device and the AMP device being lower than the first threshold;
a link quality between the neighbouring network device and the AMP device being higher than the second threshold;
the link quality between the source network device and the AMP device being lower than the link quality between the neighbouring network device and the AMP device by the third threshold;
a frequency supported by the neighbouring network device including a frequency supported by the AMP device;
a bandwidth supported by the neighbouring network device including a bandwidth supported by the AMP device; or
a data rate supported by the neighbouring network device including a data rate supported by the AMP device.

In the embodiment of the present disclosure, the AMP device has a limited capability. Therefore, in a case where the frequency supported by the network device includes the frequency supported by the AMP device, the bandwidth supported by the network device includes the bandwidth supported by the AMP device, and/or the data rate supported by the network device includes the data rate supported by the AMP device, it can be considered that the network device supports normal data transmission after handover of the AMP device.

Therefore, in the embodiments of the present disclosure, when the target network device is selected, the link quality between the network device and the AMP device is considered. In addition, whether the network device supports the transmission demands of the AMP device is also considered, for example, whether the frequency, bandwidth, and data rate supported by the network device meet the demands of the AMP device for frequency, bandwidth and data rate. It is conducive to ensuring normal data transmission after the AMP device hands over to the network device.

In some embodiments of the present disclosure, the method 200 further includes:
receiving, by the AMP device, a first command transmitted by the first network device, where the first command is used for instructing the AMP device to hand over to the target network device.

For example, after the target network device is determined, the source network device may transmit a first command to the AMP device to instruct the AMP device to hand over to the target network device. Furthermore, the AMP device hands over to the target network device according to the first command.

In some embodiments, the first command may include identification information of the target network device.

Since a connection or association has been established between the first network device and the AMP device, the first network device may transmit the first command using available resources between the first network device and the AMP device.

In some other embodiments of the present disclosure, the method 200 further includes:
receiving, by the AMP device, a second command transmitted by the target network device, where the second command is used for instructing the AMP device to hand over to the target network device.

For example, after the target network device is determined, the target network device may transmit a second command to the AMP device to instruct the AMP device to hand over to the target network device. Furthermore, the AMP device hands over to the target network device according to the second command.

In some embodiments, the second command includes at least one of:
identity information of the AMP device, identification information of the target network device, or identification information of the first network device (i.e., identification information of a network device that the AMP device currently accesses).

In some embodiments, the first command and the second command are referred to as handover commands.

In some embodiments, the second command is transmitted on a dedicated resource. For example, the AMP device may monitor a handover command transmitted by a non-serving network device on a dedicated time-frequency resource.

In some embodiments, the method 200 further includes: replying, by the AMP device, with acknowledgment information of the handover command.

For example, after receiving the handover command, the AMP device may reply with acknowledgment information to the target network device or the serving network device.

FIG. 12 is a schematic interaction diagram of a mobility management method in a handover scenario. As illustrated in FIG. 12, the following steps may be included.

In S310, a first network device (i.e., a serving network device) transmits first configuration information.

In S311, an AMP device receives the first configuration information.

In S312, the first network device transmits second configuration information to a second network device.

Correspondingly, the second network device receives the second configuration information. The specific implementation of the second configuration information and the first configuration information refers to the relevant description of the aforementioned embodiments, which will not be repeated here for the sake of brevity.

In S313, the AMP device transmits an uplink reference signal for measurement according to the first configuration information.

In S314, the first network device performs a measurement on the uplink reference signal according to the first configuration information.

In S315, the second network device performs a measurement on the uplink reference signal according to the second configuration information.

In a case where a signal quality of the second network device meets the handover condition (i.e., the second network device may be used as the target network device), subsequent steps are performed.

In S316, a source network device transmits a handover command to the AMP device.

In S317, the AMP device receives the handover command.

Furthermore, the AMP device disconnects from the source network device and establishes an association with the target network device.

Optionally, the method further includes the following step. In S318, the AMP device replies with acknowledgment information.

At this point, it can be considered that the AMP device hands over from the source network device to the target network device and establishes an association with the target network device.

Furthermore, the method further includes the following steps.

In S319, the AMP device monitors a downlink message form the target network device, such as a beacon frame, a discovery message, a system message, configuration information.

In S320, the AMP device transmits uplink data according to the configuration information of the target network device.

In summary, through the process described in Embodiment 2, the AMP device may hand over from the source network device to the target network device. After the handover is completed, the AMP device may hand over to the target network device for performing data transmission. For example, the downlink message of the source network device is no longer monitored, and only the downlink messagefrom the target network device needs to be monitored. The uplink transmission is performed according to the configuration information indicated by the target network device.

In summary, in the embodiments of the present disclosure, the network device(s) may perform the measurement(s) based on the signal transmitted by the AMP device to achieve mobility management of the AMP device. For example, the network device(s) may perform the measurement(s) on the signal transmitted by the AMP device to select an initial access network device for the AMP device. Alternatively, the network device(s) may perform the measurement(s) on the signal transmitted by the AMP device to select the target network device to which the AMP device hands over.

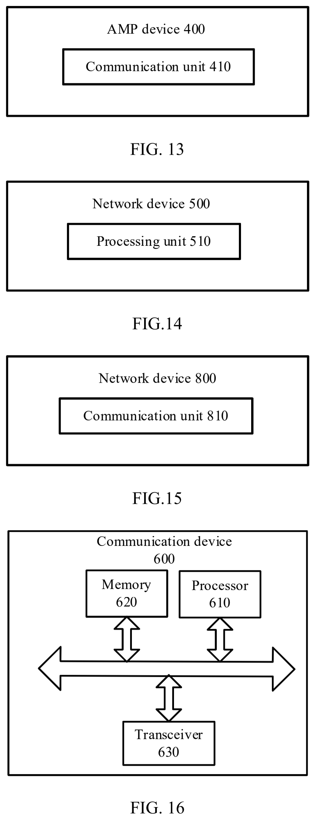

The above, with reference to FIGS. 6 to 12, describes in detail the method embodiments of the present disclosure. The following, with reference to FIGS. 13 to 18, describes in detail apparatus embodiments of the present disclosure. It should be understood that the apparatus embodiments and the method embodiments correspond to each other, and similar descriptions may refer to the method embodiments.

FIG. 13 is a schematic block diagram of an AMP device 400 according to the embodiments of the present disclosure. As illustrated in FIG. 13, the AMP device 400 includes:
a communication unit 410, configured to transmit a first signal, where the first signal is used for the network device to perform a measurement to determine a target network device that the AMP device accesses or hands over to.

In some embodiments, the target network device is determined based on measurement results of the first signal by a plurality of network devices.

In some embodiments, the first signal is used for determining the target network device that the AMP device initially accesses.

In some embodiments, a frequency of the first signal is predefined, or the frequency of the first signal is related to a frequency of a power supply signal of the AMP device.

In some embodiments, the frequency of the first signal has a first frequency offset from the frequency of the power supply signal of the AMP device.

In some embodiments, the first signal includes at least one of:
part or all of identity information of the AMP device;
parameters related to a signal strength for determining the first signal;
first request information for requesting to transmit uplink data to the network device;
configuration information related to the measurement, used for the network device to perform the measurement on the first signal;
configuration information related to processing of measurement results, used for a plurality of network devices to report and/or process the measurement results of the first signal;
a configuration related to a response signal of the first signal;
selection condition information of the target network device; or
second request information for requesting to establish an association between the AMP device and the network device.

In some embodiments, the parameters related to the signal strength for determining the first signal includes a transmission power of the first signal and/or parameters related to back scattering loss of the AMP device.

In some embodiments, the configuration information related to the measurement is used for configuring at least one of:
parameters for determining a measurement time at which the network device performs the measurement on the first signal, or filter information used by the network device to perform the measurement on the first signal.

In some embodiments, the configuration information related to the processing of the measurement results is used for configuring the plurality of network devices to report the measurement results of the first signal to a first network node, or to report the measurement results of the first signal to a same network device among the plurality of network devices; and the first network node is a high-level network node of the plurality of network devices.

In some embodiments, the configuration related to the response signal of the first signal is used for configuring a time length and/or period of a time window corresponding to the response signal of the first signal.

In some embodiments, the selection condition information of the target network device includes at least one of:
a threshold value that a measurement result of the first signal by the target network device needs to meet, frequency information that the target network device needs to support, bandwidth information that the target network device needs to support, or data rate information that the target network device needs to support.

In some embodiments, the communication unit 410 is further configured to:
monitor a response signal of the first signal within a first time window, where the response signal includes identity information of the network device.

In some embodiments, the response signal further includes at least one of:
configuration information for the AMP device to transmit uplink data;
system configuration information of the target network device; or
an association identifier between the AMP device and the target network device.

In some embodiments, the AMP device further includes:
a processing unit, configured to determine, according to whether the response signal is associated with identity information of the AMP device, whether a network device corresponding to the response signal is the target network device.

In some embodiments, in a case where the response signal is associated with the identity information of the AMP device, the network device corresponding to identity information in the response signal is determined as the target network device.

In some embodiments, the communication unit 410 is further configured to:
transmit the uplink data to the target network device according to the configuration information for the AMP device to transmit the uplink data.

In some embodiments, the communication unit 410 is further configured to:
receive broadcast information transmitted by the target network device.

In some embodiments, the communication unit 410 is further configured to:
transmit an acknowledgment signal of the response signal to the target network device.

In some embodiments, the communication unit 410 is further configured to:
transmit a second signal in a case where no response signal is received within the first time window or the received response signal is not associated with identity information of the AMP device, where a transmission power of the second signal is greater than a transmission power of the first signal and/or resources of the second signal are different from resources of the first signal.

In some embodiments, the second signal is transmitted in a broadcast mode or a unicast mode.

In some embodiments, the second signal is transmitted in an active transmission mode, or the first signal is transmitted in a back scattering mode.

In some embodiments, in a case where the second signal is transmitted in the back scattering mode, the second signal is transmitted by performing back scattering on a carrier signal, and the carrier signal is provided by a network device or a dedicated device.

In some embodiments, the network device is a first network device, the first network device is a network device that the AMP device currently accesses, and the first signal is transmitted according to first configuration information of the first network device.

In some embodiments, the first configuration information includes at least one of:
sequence information, resource information, period information, or transmission power information corresponding to the first signal.

In some embodiments, the first configuration information is determined according to a capability of the AMP device.

In some embodiments, the communication unit 410 is further configured to: receive the first command transmitted by a first network device or a second command transmitted by the target network device, where the first command is used for instructing the AMP device to hand over to the target network device, and the second command is used for instructing the AMP device to hand over to the target network device;

Hand over to the target network device according to the first command or the second command.

In some embodiments, the first command includes identification information of the target network device.

In some embodiments, the first command is transmitted using available resources between the first network device and the AMP device.

In some embodiments, the second command includes at least one of:
identity information of the AMP device, identification information of the target network device, or identification information of the first network device.

In some embodiments, the second command is transmitted on a dedicated resource.

In some embodiments, the communication unit 410 is further configured to: reply with acknowledgment information of the first command or the second command.

In some embodiments, the first signal is transmitted in a broadcast mode or a unicast mode.

In some embodiments, the first signal is transmitted in an active transmission mode, or the first signal is transmitted in a back scattering mode.

In some embodiments, in a case where the first signal is transmitted in a back scattering mode, the first signal is transmitted by performing back scattering on a carrier signal, and the carrier signal is provided by the network device or a dedicated device.

Optionally, in some embodiments, the communication unit may be a communication interface or a transceiver, or an input/output interface of a communication chip or a system on chip. The processing unit mentioned above may be one or more processors.

It should be understood that the AMP device 400 according to the embodiments of the present disclosure may correspond to the AMP device in the method embodiments of the present disclosure, and the above-mentioned and other operations and/or functions of each unit in the AMP device 400 are respectively for implementing the corresponding processes of the AMP device in the method 200 illustrated in FIGS. 6 to 18, which will not be repeated here for the sake of brevity.

FIG. 14 is a schematic block diagram of a network device according to an embodiment of the present disclosure. The network device 500 of FIG. 14 includes:
a processing unit 510, configured to perform a measurement on a first signal transmitted by an ambient power (AMP) device, where a measurement result of the first signal is used for determining a target network device that the AMP device accesses or hands over to.

In some embodiments, the target network device is determined based on measurement results of the first signal by a plurality of network devices.

In some embodiments, the first signal is used for determining the target network device that the AMP device initially accesses.

In some embodiments, a frequency of the first signal is predefined, or the frequency of the first signal is related to a frequency of a power supply signal of the AMP device.

In some embodiments, the frequency of the first signal has a first frequency offset from the frequency of the power supply signal of the AMP device.

In some embodiments, the first signal includes at least one of:
part or all of identity information of the AMP device;
parameters related to a signal strength for determining the first signal;
first request information for requesting to transmit uplink data to the network device;
configuration information related to the measurement, used for the network device to perform the measurement on the first signal;
configuration information related to processing of measurement results, used for the plurality of network devices to report and/or process the measurement results of the first signal;
a configuration related to a response signal of the first signal;
selection condition information of the target network device; or
second request information for requesting to establish an association between the AMP device and the network device.

In some embodiments, the parameters related to the signal strength for determining the first signal includes a transmission power of the first signal and/or parameters related to back scattering loss of the AMP device.

In some embodiments, the configuration information related to the measurement is used for configuring at least one of:
a measurement period for the network device to perform the measurement on the first signal, or filter information used by the network device to perform the measurement on the first signal.

In some embodiments, the configuration information related to the processing of the measurement results is used for configuring the plurality of network devices to report the measurement results of the first signal to a first network node, or to report the measurement results of the first signal to a same network device among the plurality of network devices; and the first network node is a high-level network node of the plurality of network devices.

In some embodiments, the configuration related to the response signal of the first signal is used for configuring a time length and/or period of a time window corresponding to the response signal of the first signal.

In some embodiments, the selection condition information of the target network device includes at least one of:
a threshold value that a measurement result of the first signal by the target network device needs to meet, frequency information that the target network device needs to support, bandwidth information that the target network device needs to support, or data rate information that the target network device needs to support.

In some embodiments, the network device further includes:
a communication unit, configured to transmit a response signal of the first signal to the AMP device in a case where the network device is the target network device, where the response signal includes the identity information of the target network device.

In some embodiments, the response signal further includes at least one of:
configuration information for the AMP device to transmit uplink data;
system configuration information of the target network device; or
an association identifier between the AMP device and the target network device.

In some embodiments, the network device further includes:
a communication unit, configured to receive an acknowledgment signal of the response signal transmitted by the AMP device.

In some embodiments, the network device is a first network device, the first network device is a network device that the AMP device currently accesses, and the network device further includes:
a communication unit, configured to transmit first configuration information to the AMP device, the first signal being transmitted according to the first configuration information

In some embodiments, the first configuration information includes at least one of:
sequence information, resource information, period information, or transmission power information corresponding to the first signal.

In some embodiments, the first configuration information is determined according to a capability of the AMP device.

In some embodiments, the network device is a first network device, the first network device is a network device that the AMP device currently accesses, and the network device further includes:
a communication unit, configured to transmit second configuration information to at least one second network device, where the second configuration information includes the first configuration information.

In some embodiments, the second configuration information further includes at least one of:
an association between the first configuration information and the AMP device, a configuration related to processing of measurement result(s) of the first signal by the at least one second network device, or handover condition information of the target network device.

In some embodiments, the handover condition information of the target network device includes at least one of:
a threshold value that a measurement result of the first signal by the first network device needs to meet, a threshold value that a measurement result of the first signal by the target network device needs to meet, frequency information that the target network device needs to support, bandwidth information that the target network device needs to support, or data rate information that the target network device needs to support.

In some embodiments, the second configuration information is transmitted in a broadcast mode or a unicast mode.

In some embodiments, the network device is a first network device, the first network device is a network device that the AMP device currently accesses, and the network device further includes:
a communication unit, configured to transmit a first command to the AMP device, where the first command is used for instructing the AMP device to handover to the target network device.

In some embodiments, the first command includes identification information of the target network device.

In some embodiments, the first command is transmitted using available resources between the first network device and the AMP device.

In some embodiments, the first network device is a target network device, and the network device further includes:
a communication unit, configured to transmit a second command to the AMP device, where the second command is used for instructing the AMP device to hand over to the target network device.

In some embodiments, the second command includes at least one of:
identity information of the AMP device, identification information of the target network device, or identification information of a first network device, where the first network device is a network device that the AMP device currently accesses.

In some embodiments, the second command is transmitted on a dedicated resource.

In some embodiments, the first network device is a target network device, and the network device further includes:
a communication unit, configured to receive acknowledgment information of the second command replied by the AMP device.

In some embodiments, the first signal is transmitted in a broadcast mode or a unicast mode.

In some embodiments, the first signal is transmitted in an active transmission mode, or the first signal is transmitted in a back scattering mode.

In some embodiments, in a case where the first signal is transmitted in a back scattering mode, the first signal is transmitted by performing back scattering on a carrier signal, and the carrier signal is provided by the network device or a dedicated device.

Optionally, in some embodiments, the communication unit may be a communication interface or a transceiver, or an input/output interface of a communication chip or a system on chip. The processing unit mentioned above may be one or more processors.

It should be understood that the network device 500 according to the embodiments of the present disclosure may correspond to the network device in the method embodiments of the present disclosure, and the above-mentioned and other operations and/or functions of each unit in the network device 500 are respectively for implementing the corresponding processes of the network device in the method 200 illustrated in FIGS. 6 to 18, which will not be repeated here for the sake of brevity.

FIG. 15 is a schematic block diagram of a network device according to the embodiments of the present disclosure. The network device 800 of FIG. 15 includes:
a communication unit 810, configured to receive second configuration information transmitted by the first network device, where the second configuration information is used for selecting a target network device to which an ambient power (AMP) device hands over, the first network device is a network device that the AMP device currently accesses, and the network device is a network device other than the first network device.

In some embodiments, the second configuration information includes first configuration information, the first configuration information is a transmission configuration of a first signal from the AMP device, and the target network device is determined by performing a measurement on the first signal.

In some embodiments, the first configuration information includes at least one of:
sequence information, resource information, period information, or transmission power information corresponding to the first signal.

In some embodiments, the first configuration information is determined according to a capability of the AMP device.

In some embodiments, the network device 800 further includes:
a processing unit, configured to perform, according to the first configuration information, a measurement on the first signal transmitted by the AMP device, where the measurement result of the first signal is used for determining the target network device.

In some embodiments, the second configuration information further includes at least one of:
an association between the first configuration information and the AMP device, a configuration related to processing of a measurement result of the first signal by the second network device, or handover condition information of the target network device.

In some embodiments, the handover condition information of the target network device includes at least one of:
a threshold value that a measurement result of the first signal by the first network device needs to meet, a threshold value that a measurement result of the first signal by the target network device needs to meet, frequency information that the target network device needs to support, bandwidth information that the target network device needs to support, or data rate information that the target network device needs to support.

In some embodiments, the second configuration information is transmitted in a broadcast mode or a unicast mode.

Optionally, in some embodiments, the communication unit may be a communication interface or a transceiver, or an input/output interface of a communication chip or a system on chip. The processing unit mentioned above may be one or more processors.

It should be understood that the network device 800 according to the embodiments of the present disclosure may correspond to the second network device in the method embodiments of the present disclosure, and the above-mentioned and other operations and/or functions of each unit in the second network device 800 are respectively for implementing the corresponding processes of the second network device in the method 200 illustrated in FIGS. 6 to 18, which will not be repeated here for the sake of brevity.

FIG. 16 is a schematic structural diagram of a communication device 600 provided in the embodiments of the present disclosure. The communication device 600 illustrated in FIG. 16 includes a processor 610. The processor 610 may call and run a computer program from a memory to implement the method in the embodiments of the present disclosure.

Optionally, as illustrated in FIG. 6, the communication device 600 may further include a memory 620. The processor 610 may call and run a computer program from the memory 620 to implement the method in the embodiments of the present disclosure.

The memory 620 may be a separate device independent of the processor 610, or may be integrated into the processor 610.

Optionally, as illustrated in FIG. 16, the communication device 600 may further include a transceiver 630. The processor 610 may control the transceiver 630 to communicate with other devices, and specifically, to transmit information or data to other devices, or receive information or data transmitted by other devices.

The transceiver 630 may include a transmitter and a receiver. The transceiver 630 may further include antenna(s), and the number of the antenna(s) may be one or more.

Optionally, the communication device 600 may specifically be a network device of the embodiments of the present disclosure, and the communication device 600 may implement the corresponding processes implemented by the network device in various methods of the embodiments of the present disclosure, which will not be described in detail here for the sake of brevity.

Optionally, the communication device 600 may specifically be the AMP device of the embodiments of the present disclosure, and the communication device 600 may implement the corresponding processes implemented by the AMP device in various methods of the embodiments of the present disclosure, which will not be described in detail here for the sake of brevity.

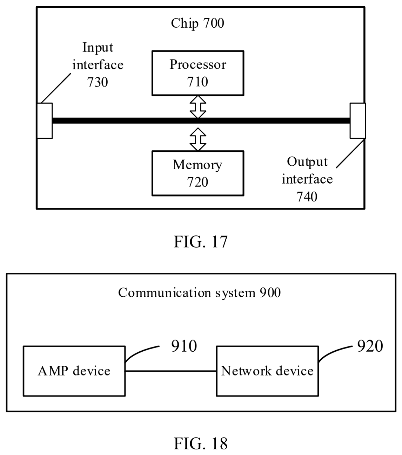

FIG. 17 is a schematic structural diagram of a chip provided in the embodiments of the present disclosure. The chip 700 illustrated in FIG. 17 includes a processor 710. The processor 710 may call and run a computer program from a memory to implement the method in the embodiments of the present disclosure.

Optionally, as illustrated in FIG. 17, the chip 700 may further include a memory 720. The processor 710 may call and run a computer program from the memory 720 to implement the method in the embodiments of the present disclosure.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, may obtain information or data transmitted by other devices or chips.

Optionally, the chip 700 may further include an output interface 740. The processor 710 may control the output interface 740 to communicate with other devices or chips, and specifically, may output information or data to other devices or chips.

Optionally, the chip may be applied to the network device in the embodiments of the present disclosure, and the chip may implement the corresponding processes implemented by the network device in various methods of the embodiments of the present disclosure, which will not be repeated here for the sake of brevity.

Optionally, the chip may be applied to the mobile terminal/terminal device in the embodiments of the present disclosure, and the chip may implement the corresponding processes implemented by the mobile terminal/terminal device in the various methods of the embodiments of the present disclosure, which will not be repeated here for the sake of brevity.

It should be understood that the chip mentioned in the embodiments of the present disclosure may also be referred to as a system-level chip, a system chip, a chip system or a system-on-chip chip, or the like.

FIG. 18 is a schematic block diagram of a communication system 900 provided in the embodiments of the present disclosure. As illustrated in FIG. 18, the communication system 900 includes an AMP device 910 and a network device 920.

The AMP device 910 may be configured to implement the corresponding functions implemented by the AMP device in the above methods, and the network device 920 may be configured to implement the corresponding functions implemented by the network device in the above methods, which will not be repeated here for the sake of brevity.

It should be understood that the processor of the embodiment of the present disclosure may be an integrated circuit chip with signal processing capabilities. In the implementation process, various steps of the above method embodiments may be completed by an integrated logic circuit of hardware in the processor or an instruction in a software form. The above-mentioned processor may be a general-purpose processor, a digital signal processor (DSP), an application specific integrated circuit (ASIC), a field programmable gate array (FPGA) or other programmable logic device, a discrete gate or transistor logic device, or a discrete hardware component. The various methods, steps and logical block diagrams disclosed in the embodiments of the present disclosure may be implemented or executed. A general purpose processor may be a microprocessor, or the processor may be any conventional processor or the like. The steps of the method disclosed in the embodiments of the present disclosure may be directly embodied as being executed by a hardware decoding processor, or may be implemented by a combination of hardware and software modules in the decoding processor. The software module may be located in mature storage media in the art, such as a random access memory, a flash memory, a read-only memory, a programmable read-only memory, or an electrically erasable programmable memory, and a register. The storage medium is located in the memory, and the processor reads the information in the memory and completes the steps of the above method in combination with its hardware.

It can be understood that the memory in the embodiments of the present disclosure may be a volatile memory or a non-volatile memory, or may include both volatile and non-volatile memories. Among them, the non-volatile memory can be a read-only memory (ROM), a programmable read-only memory (programmable ROM, PROM), an erasable programmable read-only memory (Erasable PROM, EPROM), an electrically erasable programmable read-only memory (Electrically EPROM, EEPROM), or a flash memory. The volatile memory may be a random access memory (RAM), which acts as an external cache. By way of example and not limitation, many forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct memory bus random access memory (Direct Rambus RAM, DR RAM). It should be noted that memories of the systems and methods described herein are intended to include, without being limited to, these and any other suitable types of memory.

It should be understood that the above-mentioned memories are exemplary but not restrictive. For example, the memories in the embodiments of the present disclosure may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM) and a direct rambus random access memory (Direct Rambus RAM, DR RAM), etc. That is, the memories in the embodiments of the present disclosure are intended to include but is not limited to these and any other suitable types of memory.

The embodiments of the present disclosure further provide a computer-readable storage medium for storing a computer program.

Optionally, the computer-readable storage medium may be applied to the network device in the embodiments of the present disclosure, and the computer program causes a computer to perform the corresponding processes implemented by the network device in the various methods of the embodiments of the present disclosure, which will not be repeated here for the sake of brevity.

Optionally, the computer-readable storage medium may be applied to the AMP device in the embodiments of the present disclosure, and the computer program causes a computer to perform the corresponding processes implemented by the AMP device in the various methods of the embodiments of the present disclosure, which will not be repeated here for the sake of brevity.

The embodiments of the present disclosure further provide a computer program product including computer program instructions.

Optionally, the computer program product may be applied to the network device in the embodiments of the present disclosure, and the computer program instructions cause a computer to perform the corresponding processes implemented by the network device in the various methods of the embodiments of the present disclosure, which will not be repeated here for the sake of brevity.

Optionally, the computer program product may be applied to the AMP device in the embodiments of the present disclosure, and the computer program instructions cause a computer to perform the corresponding processes implemented by the AMP device in the various methods of the embodiments of the present disclosure, which will not be repeated here for the sake of brevity.

The embodiments of the present disclosure further provide a computer program.

Optionally, the computer program may be applied to the network device in the embodiments of the present disclosure. When executed on a computer, the computer program causes a computer to perform the corresponding processes implemented by the network device in the various methods in the embodiments of the present disclosure, which will not be repeated here for the sake of brevity.

Optionally, the computer program may be applied to the AMP device in the embodiments of the present disclosure. When executed on a computer, the computer program causes a computer to perform the corresponding processes implemented by the AMP device in the various methods of the embodiments of the present disclosure, which will not be repeated here for the sake of brevity.

Those ordinary skilled in the art will appreciate that the units and algorithm steps of various examples described in conjunction with the embodiments disclosed herein may be implemented in electronic hardware, or in a combination of computer software and electronic hardware. Whether these functions are performed by way of hardware or software depends on a specific application and a design constraint of the technical solution. A skilled person may use different methods to implement the described functions for each specific application, but such implementation should not be considered to be beyond the scope of the present disclosure.

Those skilled in the art may clearly understand that, for the convenience and brevity of description, the specific working processes of the systems, devices/apparatuses and units described above may refer to the corresponding processes in the aforementioned method embodiments and will not be repeated here.

In several embodiments provided in the present disclosure, it should be understood that the disclosed systems, devices/apparatuses, and methods may be implemented in other ways. For example, the device/apparatus embodiments described above are merely illustrative. For example, the division of the units is merely a logical function division. There may be other division methods in actual implementations. For example, multiple units or components may be combined or integrated into another system, or some features may be ignored or not executed. Another point is that the mutual coupling or direct coupling or communicative connection shown or discussed may be an indirect coupling or communicative connection via some interface, device or unit, which may be electrical, mechanical or other forms.

The units described as separate components may or may not be physically separated, and the components shown as units may or may not be physical units, that is, they may be located in one place or distributed over multiple network units. Some or all of the units may be selected based on actual needs to achieve the purpose of the solution of the embodiments.

In addition, various functional units in the various embodiments of the present disclosure may be integrated into one processing unit, or various units may exist physically separately, or two or more units may be integrated into one unit.

In a case where the described functions are implemented in the form of a software functional unit and sold or used as an independent product, the functions may be stored in a computer-readable storage medium. Based on such an understanding, the technical solution of the present disclosure may essentially be embodied in the form of a software product, or a part that contributes to the prior art, or a part of the technical solution may be embodied in the form of a software product. The computer software product is stored in a storage medium and includes some instructions for enabling a computer device (which may be a personal computer, a server, or a network device, etc.) to perform all or part of the steps of the method described in various embodiments of the present disclosure. The aforementioned storage media include: a USB flash drive (U disk), a mobile hard disk, a ROM, a RAM, a diskette or an optical disk and various mediums that may store program codes.

The above descriptions are merely specific implementations of the present disclosure, but the protection scope of the present disclosure is not limited thereto. Any skilled familiar with this technical field may easily think of changes or substitutions within the technical scope disclosed in the present disclosure, which should be all covered within the protection scope of the present disclosure. Therefore, the protection scope of the present disclosure shall be subjects to the protection scope of the claims.

## Claims

1. A wireless communication method, comprising:
transmitting, by an ambient power (AMP) device, a first signal, wherein the first signal is used for a network device to perform a measurement to determine a target network device that the AMP device accesses or hands over to.

2. The method according to claim 1, wherein the target network device is determined based on measurement results of the first signal by a plurality of network devices.

3. The method according to claim 1 or 2, wherein the first signal is used for determining the target network device that the AMP device initially accesses.

4. The method according to claim 3, wherein a frequency of the first signal is predefined, or the frequency of the first signal is related to a frequency of a power supply signal of the AMP device.

5. The method according to claim 4, wherein the frequency of the first signal has a first frequency offset from the frequency of the power supply signal of the AMP device.

6. The method according to any one of claims 3 to 5, wherein the first signal comprises at least one of:
part or all of identity information of the AMP device;
parameters related to a signal strength for determining the first signal;
first request information for requesting to transmit uplink data to the network device;
configuration information related to the measurement, used for the network device to perform the measurement on the first signal;
configuration information related to processing of measurement results, used for a plurality of network devices to report and/or process the measurement results of the first signal;
a configuration related to a response signal of the first signal;
selection condition information of the target network device; or
second request information for requesting to establish an association between the AMP device and the network device.

7. The method according to claim 6, wherein the parameters related to the signal strength for determining the first signal comprises a transmission power of the first signal and/or parameters related to back scattering loss of the AMP device.

8. The method according to claim 6 or 7, wherein the configuration information related to the measurement is used for configuring at least one of:
parameters for determining a measurement time at which the network device performs the measurement on the first signal, or filter information used by the network device to perform the measurement on the first signal.

9. The method according to any one of claims 6 to 8, wherein the configuration information related to the processing of the measurement results is used for configuring the plurality of network devices to report the measurement results of the first signal to a first network node, or to report the measurement results of the first signal to a same network device among the plurality of network devices; and the first network node is a high-level network node of the plurality of network devices.

10. The method according to any one of claims 6 to 9, wherein the configuration related to the response signal of the first signal is used for configuring a time length and/or period of a time window corresponding to the response signal of the first signal.

11. The method according to any one of claims 6 to 10, wherein the selection condition information of the target network device comprises at least one of:
a threshold value that a measurement result of the first signal by the target network device needs to meet, frequency information that the target network device needs to support, bandwidth information that the target network device needs to support, or data rate information that the target network device needs to support.

12. The method according to any one of claims 5 to 11, further comprising:
monitoring, by the AMP device, a response signal of the first signal within a first time window, wherein the response signal comprises identity information of the network device.

13. The method according to claim 12, wherein the response signal further comprises at least one of:
configuration information for the AMP device to transmit uplink data;
system configuration information of the target network device; or
an association identifier between the AMP device and the target network device.

14. The method according to claim 12 or 13, further comprising:
determining, according to whether the response signal is associated with identity information of the AMP device, whether a network device corresponding to the response signal is the target network device.

15. The method according to claim 14, wherein in a case where the response signal is associated with the identity information of the AMP device, the network device corresponding to identity information in the response signal is determined as the target network device.

16. The method according to claim 15, further comprising:
transmitting, by the AMP device, the uplink data to the target network device according to the configuration information for the AMP device to transmit the uplink data.

17. The method according to claim 15 or 16, further comprising:
receiving, by the AMP device, broadcast information transmitted by the target network device.

18. The method according to any one of claims 15 to 17, further comprising:
transmitting, by the AMP device, an acknowledgment signal of the response signal to the target network device.

19. The method according to any one of claims 12 to 14, further comprising:
in a case where no response signal is received within the first time window or the received response signal is not associated with identity information of the AMP device, transmitting, by the AMP device, a second signal, wherein a transmission power of the second signal is greater than a transmission power of the first signal and/or resources of the second signal are different from resources of the first signal.

20. The method according to claim 1 or 2, wherein the network device is a first network device, the first network device is a network device that the AMP device currently accesses, and the first signal is transmitted according to first configuration information of the first network device.

21. The method according to claim 20, wherein the first configuration information comprises at least one of:
sequence information, resource information, period information, or transmission power information corresponding to the first signal.

22. The method according to claim 20 or 21, wherein the first configuration information is determined according to a capability of the AMP device.

23. The method according to any one of claims 20 to 22, further comprising:
receiving, by the AMP device, a first command transmitted by the first network device or a second command transmitted by the target network device, wherein the first command is used for instructing the AMP device to hand over to the target network device, and the second command is used for instructing the AMP device to hand over to the target network device; and
handing over to the target network device according to the first command or the second command.

24. The method according to claim 23, wherein the first command comprises identification information of the target network device.

25. The method according to claim 23 or 24, wherein the first command is transmitted using available resources between the first network device and the AMP device.

26. The method according to claim 23, wherein the second command comprises at least one of:
identity information of the AMP device, identification information of the target network device, or identification information of the first network device.

27. The method according to claim 23 or 26, wherein the second command is transmitted on a dedicated resource.

28. The method according to any one of claims 23 to 27, further comprising:
replying, by the AMP device, with acknowledgment information of the first command or the second command.

29. The method according to any one of claims 1 to 28, wherein the first signal is transmitted in a broadcast mode or a unicast mode.

30. The method according to any one of claims 1 to 29, wherein the first signal is transmitted in an active transmission mode, or the first signal is transmitted in a back scattering mode.

31. The method according to any one of claims 1 to 30, wherein in a case where the first signal is transmitted in a back scattering mode, the first signal is transmitted by performing back scattering on a carrier signal, and the carrier signal is provided by the network device or a dedicated device.

32. A wireless communication method, comprising:
performing, by a network device, a measurement on a first signal transmitted by an ambient power (AMP) device, wherein a measurement result of the first signal is used for determining a target network device that the AMP device accesses or hands over to.

33. The method according to claim 32, wherein the target network device is determined based on measurement results of the first signal by a plurality of network devices.

34. The method according to claim 32 or 33, wherein the first signal is used for determining the target network device that the AMP device initially accesses.

35. The method according to claim 34, wherein a frequency of the first signal is predefined, or the frequency of the first signal is related to a frequency of a power supply signal of the AMP device.

36. The method according to claim 35, wherein the frequency of the first signal has a first frequency offset from the frequency of the power supply signal of the AMP device.

37. The method according to any one of claims 34 to 36, wherein the first signal comprises at least one of:
part or all of identity information of the AMP device;
parameters related to a signal strength for determining the first signal;
first request information for requesting to transmit uplink data to the network device;
configuration information related to the measurement, used for the network device to perform the measurement on the first signal;
configuration information related to processing of measurement results, used for a plurality of network devices to report and/or process the measurement results of the first signal;
a configuration related to a response signal of the first signal;
selection condition information of the target network device; or
second request information for requesting to establish an association between the AMP device and the network device.

38. The method according to claim 37, wherein the parameters related to the signal strength for determining the first signal comprises a transmission power of the first signal and/or parameters related to back scattering loss of the AMP device.

39. The method according to claim 37 or 38, wherein the configuration information related to the measurement is used for configuring at least one of:
a measurement period for the network device to perform the measurement on the first signal, or filter information used by the network device to perform the measurement on the first signal.

40. The method according to any one of claims 37 to 39, wherein the configuration information related to the processing of the measurement results is used for configuring the plurality of network devices to report the measurement results of the first signal to a first network node, or to report the measurement results of the first signal to a same network device among the plurality of network devices; and the first network node is a high-level network node of the plurality of network devices.

41. The method according to any one of claims 37 to 40, wherein the configuration related to the response signal of the first signal is used for configuring a time length and/or period of a time window corresponding to the response signal of the first signal.

42. The method according to any one of claims 37 to 41, wherein the selection condition information of the target network device comprises at least one of:
a threshold value that a measurement result of the first signal by the target network device needs to meet, frequency information that the target network device needs to support, bandwidth information that the target network device needs to support, or data rate information that the target network device needs to support.

43. The method according to any one of claims 34 to 42, further comprising:
in a case where the network device is the target network device, transmitting, by the network device, a response signal of the first signal to the AMP device, wherein the response signal comprises identity information of the target network device.

44. The method according to claim 43, wherein the response signal further comprises at least one of:
configuration information for the AMP device to transmit uplink data;
system configuration information of the target network device; or
an association identifier between the AMP device and the target network device.

45. The method according to claim 43 or 44, further comprising:
receiving, by the network device, an acknowledgment signal of the response signal transmitted by the AMP device.

46. The method according to claim 32 or 33, wherein the network device is a first network device, the first network device is a network device that the AMP device currently accesses, and the method further comprises:
transmitting, by the first network device, first configuration information to the AMP device, the first signal being transmitted according to the first configuration information.

47. The method according to claim 46, wherein the first configuration information comprises at least one of:
sequence information, resource information, period information, or transmission power information corresponding to the first signal.

48. The method according to claim 46 or 47, wherein the first configuration information is determined according to a capability of the AMP device.

49. The method according to any one of claims 46 to 48, further comprising:
transmitting, by the first network device, second configuration information to at least one second network device, wherein the second configuration information comprises the first configuration information.

50. The method according to claim 49, wherein the second configuration information further comprises at least one of:
an association between the first configuration information and the AMP device, a configuration related to processing of measurement result(s) of the first signal by the at least one second network device, or handover condition information of the target network device.

51. The method according to claim 50, wherein the handover condition information of the target network device comprises at least one of:
a threshold value that a measurement result of the first signal by the first network device needs to meet, a threshold value that a measurement result of the first signal by the target network device needs to meet, frequency information that the target network device needs to support, bandwidth information that the target network device needs to support, or data rate information that the target network device needs to support.

52. The method according to any one of claims 49 to 51, wherein the second configuration information is transmitted in a broadcast mode or a unicast mode.

53. The method according to any one of claims 46 to 52, further comprising:
transmitting, by the first network device, a first command to the AMP device, wherein the first command is used for instructing the AMP device to hand over to the target network device, and the first command comprises identification information of the target network device.

54. The method according to claim 53, wherein the first command is transmitted using available resources between the first network device and the AMP device.

55. The method according to claim 32 or 33, wherein the network device is a target network device, and the method further comprises:
transmitting, by the target network device, a second command to the AMP device, wherein the second command is used for instructing the AMP device to hand over to the target network device.

56. The method according to claim 55, wherein the second command comprises at least one of:
identity information of the AMP device, identification information of the target network device, or identification information of a first network device, wherein the first network device is a network device that the AMP device currently accesses.

57. The method according to claim 55 or 56, wherein the second command is transmitted on a dedicated resource.

58. The method according to any one of claims 55 to 57, further comprising:
receiving, by the target network device, acknowledgment information of the second command replied by the AMP device.

59. The method according to any one of claims 32 to 58, wherein the first signal is transmitted in a broadcast mode or a unicast mode.

60. The method according to any one of claims 32 to 59, wherein the first signal is transmitted in an active transmission mode, or the first signal is transmitted in a back scattering mode.

61. The method according to any one of claims 32 to 60, wherein in a case where the first signal is transmitted in a back scattering mode, the first signal is transmitted by performing back scattering on a carrier signal, and the carrier signal is provided by the network device or a dedicated device.

62. A wireless communication method, comprising:
receiving, by a second network device, second configuration information transmitted by a first network device, wherein the second configuration information is used for selecting a target network device to which an ambient power (AMP) device hands over, the first network device is a network device that the AMP device currently accesses, and the second network device is a network device other than the first network device.

63. The method according to claim 62, wherein the second configuration information comprises first configuration information, the first configuration information is a transmission configuration of a first signal from the AMP device, and the target network device is determined by performing a measurement on the first signal.

64. The method according to claim 63, wherein the first configuration information comprises at least one of:
sequence information, resource information, period information, or transmission power information corresponding to the first signal.

65. The method according to claim 63 or 64, wherein the first configuration information is determined according to a capability of the AMP device.

66. The method according to any one of claims 63 to 65, further comprising:
performing, by the second network device, according to the first configuration information, a measurement on the first signal transmitted by the AMP device, wherein a measurement result of the first signal is used for determining the target network device.

67. The method according to any one of claims 63 to 66, wherein the second configuration information further comprises at least one of:
an association between the first configuration information and the AMP device, a configuration related to processing of a measurement result of the first signal by the second network device, or handover condition information of the target network device.

68. The method according to claim 67, wherein the handover condition information of the target network device comprises at least one of:
a threshold value that a measurement result of the first signal by the first network device needs to meet, a threshold value that a measurement result of the first signal by the target network device needs to meet, frequency information that the target network device needs to support, bandwidth information that the target network device needs to support, or data rate information that the target network device needs to support.

69. The method according to any one of claims 62 to 68, wherein the second configuration information is transmitted in a broadcast mode or a unicast mode.

70. An ambient power (AMP) device, comprising:
a communication unit, configured to transmit a first signal, wherein the first signal is used for a network device to perform a measurement to determine a target network device that the AMP device accesses or hands over to.

71. A network device, comprising:
a processing unit, configured to perform a measurement on a first signal transmitted by an ambient power (AMP) device, wherein a measurement result of the first signal is used for determining a target network device that the AMP device accesses or hands over to.

72. A network device, comprising:
a communication unit, configured to receive second configuration information transmitted by a first network device, wherein the second configuration information is used for selecting a target network device to which an ambient power (AMP) device hands over, the first network device is a network device that the AMP device currently accesses, and the network device is a network device other than the first network device.

73. An ambient power (AMP) device, comprising: a processor and a memory, wherein the memory is configured to store a computer program, and the processor is configured to call and run the computer program stored in the memory to perform the method according to any one of claims 1 to 31.

74. A network device, comprising: a processor and a memory, wherein the memory is configured to store a computer program, the processor is configured to call and run the computer program stored in the memory to perform the method according to any one of claims 32 to 61, or the method according to any one of claims 62 to 69.

75. A chip, comprising: a processor, wherein the processor is configured to call and run a computer program from a memory to cause a device equipped with the chip to perform the method according to any one of claims 1 to 31, or the method according to any one of claims 32 to 61, or the method according to any one of claims 62 to 69.

76. A computer-readable storage medium, configured to store a computer program, wherein the computer program causes a computer to perform the method according to any one of claims 1 to 31, the method according to any one of claims 32 to 61, or the method according to any one of claims 62 to 69.

77. A computer program product, comprising computer program instructions, wherein the computer program instructions cause a computer to perform the method according to any one of claims 1 to 31, the method according to any one of claims 32 to 61, or the method according to any one of claims 62 to 69.

78. A computer program, wherein the computer program causes a computer to perform the method according to any one of claims 1 to 31, or the method according to any one of claims 32 to 61, or the method according to any one of claims 62 to 69.
